(19) Europäisches Patentamt
European Patent Office
Office européen des brevets

(11) EP 3 911 930 B1

(12) **EUROPEAN PATENT SPECIFICATION**

(45) Date of publication and mention of the grant of the patent:
**27.12.2023 Bulletin 2023/52**

(21) Application number: **20741706.4**

(22) Date of filing: **17.01.2020**

(51) International Patent Classification (IPC):
***G01M 3/22*** *(2006.01)* ***G01M 3/20*** *(2006.01)*
***G01M 3/04*** *(2006.01)* ***G01N 21/77*** *(2006.01)*
***G01N 21/78*** *(2006.01)* ***G01N 31/22*** *(2006.01)*

(52) Cooperative Patent Classification (CPC):
**G01N 31/223; G01M 3/223; G01M 3/2861;**
G01N 21/78

(86) International application number:
**PCT/US2020/014213**

(87) International publication number:
**WO 2020/150680 (23.07.2020 Gazette 2020/30)**

(54) **GAS AND/OR CHEMICAL LIQUID INDICATOR**

ANZEIGE FÜR GAS UND/ODER CHEMISCHE FLÜSSIGKEITEN

INDICATEUR DE GAZ ET/OU DE LIQUIDE CHIMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2019 US 201962794322 P**
**12.09.2019 US 201962899669 P**

(43) Date of publication of application:
**24.11.2021 Bulletin 2021/47**

(73) Proprietor: **Nitto Denko Corporation**
**Ibaraki-shi, Osaka 567-8680 (JP)**

(72) Inventors:
- **NAKAMURA, Koichi**
  **Rockledge, Florida 32955 (US)**
- **MOHAJERI, Nahid**
  **Rockledge, Florida 32955 (US)**

(74) Representative: **Hoffmann Eitle**
**Patent- und Rechtsanwälte PartmbB**
**Arabellastraße 30**
**81925 München (DE)**

(56) References cited:
**WO-A1-2018/152431**
**DE-A1- 19 605 522**
**JP-A- S6 093 329**
**JP-A- S6 150 032**
**JP-A- S57 194 328**
**JP-A- 2006 090 971**
**US-A1- 2003 003 589**
**US-A1- 2017 027 482**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 911 930 B1

## Description

### Field of the Invention

The disclosed embodiments relate to an indicator for detecting leaks of ammonia gas and/or liquid from joint part of pipes, flanges, leak port, and methods for manufacturing and using of said indicator.

### Background of the Invention

Ammonia is a caustic and hazardous compound when used in high concentrations. Any leakage of ammonia gases and liquids can create fatal incidents due to its high flammability and health effects on workers' lungs. Gas leaks are more dangerous than liquid leaks since the majority of gas leaks cannot be observed by the naked eye. Ammonia gas has been used for fertilizer. In the off season, remaining ammonia gas is kept in tanks and periodic checks to find any leaks is required. Also, ammonia gas is used for ice making for rinks and refrigeration for agricultural goods and their processing plants.

Typically, a gas leak is detected when its pressure drops in the pipeline, there is an unusual consumption rate, and/or by using area gas sensors. Also, area by area or room by room, area gas sensors may be installed. These may indicate some gas leak exists somewhere in certain areas. However, it is not helpful with finding the exact location of a leak that may be at a flange, leak port, valve, or connection to gauges. Hence, to determine the exact leak location, the operator needs to check each individual joint part one by one with a handy sensor, soapy water, sulfur stick, or litmus paper. After major maintenance has been carried out, leak tests need to be performed carefully. In general, it takes a long time to find the exact leak location and as a result, operation time may be lost.

To find out the exact leak location, in case of ammonia gas, sulfur sticks have been used for gas leak detection. However, to use a sulfur stick, the stick needs to be ignited. Since ammonia gas is a flammable gas, having an open flame during the stick's ignition and during the stick's usage is not a safe activity. Another method to detect ammonia gas leaks is using litmus paper. When litmus paper is used, it needs to be wet. Therefore, once it starts drying out, the operator can't differentiate between a no gas leak or non-detectable situations. In some cases, since pH dyes are too sensitive, the color of pH dyes often changes by just stepping in an area before identifying where exact leak location is. The use of handy sensor is influenced by wind and distance. Soapy water may be difficult to apply if you want to check large flanges, inverted places, or areas close to the wall. Both sensors and soapy water techniques require special skills to be used effectively.

Using the above-mentioned methods, the existence of leaks can be recognized relatively easy. However, it is more challenging to find the exact location of the leak. Furthermore, they are all reactive responses to a leak situation.

Wrapping joint parts on pipes with a gas detection tape whose color can be changed when a gas leak occurs is a more ideal way of detection. Since wrapping creates a confined space between the pipe and the tape, the leaking gas can accumulate at higher concentrations at that area. This makes detection by tape easier than other conventional methods in the art. Furthermore, the detection tape can provide long term monitoring of surfaces prone to leak development.

In the case of ammonia gas, several products, listed in Table 1, are available in the market (ammonia detection tape, Pacific Sentry, USA; ammonia detection cloth, Precision Laboratories, UK; TAL-4 NIT Safety, Korea; BT-50 SMTEK, Korea). Also, WO2017/209366 discloses adding pH dyes in a silicone adhesive to make an ammonia leak detection adhesive tape. US Pat. Pub. No. 2008041136 discloses using a pH dye like bromophenol blue, congo red, etc. as an ammonia gas monitor. US Pat. Nos. 3,528,780 and 7,592,184 disclose ammonia gas sensors utilizing pH dyes.

These prior art technologies utilize pH dyes whose color can change when it contacts gases because of the change in its pH. Bromo thymol blue, bromo cresol green (BCG), thymol blue, phenol red, bromophenol red, chloro phenol red, etc. are commonly used as chemochromic (color-changing) materials in the art.

Although the detectable chemical is different from that of the present invention, US Pat. No. 5,529,841 discloses a field test kit that can detect hydrogen sulfide in liquid. In this kit, lead acetate, copper sulfate, copper thiocyanate, and silver nitrate are described as colorimetric particulates that change color when they are exposed to hydrogen sulfide. This colorimetric particulate is covered by silicone barrier film or it is dispersed in silicone barrier film that is in solid form. Copper sulfate is dissolved in water and spread on plastic film or on filter paper. In cases where a colorimetric particulate is added into a silicone polymer, it is directly mixed with the silicone polymer in a liquid hydrocarbon like hexane or xylene.

JPS6150032 discloses an ammonia leakage detector comprising an adhesive tape onto which a colour-change agent is attached, wherein the colour-change agent is copper ion-exchange zeolite powder.

US Pat. No. 9,958,397 describes an exemplary process for sensing a toxic chemical, which includes contacting a toxic chemical with a sorbent that includes a porous metal hydroxide and a transition metal reactant suitable to react with a toxic chemical.

The instability of pH dyes makes it difficult to use in the harsh conditions of actual industrial applications. pH

dyes are easily decomposed by UV light and therefore are not suitable for outdoor applications on ammonia gas pipelines. In the case of pH dye, when ammonia gas is present, color change can occur. However, if the flow of ammonia gas is stopped, the color reverses back immediately. This is not useful for practical purposes. If a gas leak is recognized by its smell or by pressure drop in a pipeline, best practice is for the gas flow to be stopped immediately. At that time, if the color-change disappears, then the exact location of the leak cannot be recognized. In the case of existing products available in the market as shown in Table 1, all color-change reverted back to the original color right after the product was no longer exposed to the gas.

*Table 1- Current Chemochromic Ammonia Detection Technologies*

| **Manufacturer** | **Product name and type** | **Existence of pH dye** | **Reversible (reverted back to original color after ammonia gas is gone)** |
|---|---|---|---|
| Pacific Sentry (USA) | Ammonia detection tape, PTFE pipe tape | yes | yes, immediately |
| Precision Laboratory (UK, USA) | Ammonia detection cloth | yes | yes, immediately |
| NIT Safety (Korea) | TAL-4, pH paper, both sides have double coated tape | yes | yes, immediately |
| SMTEK (Korea) | BT-50 | yes | yes, immediately |

## Summary of the Invention

This invention provides a chemochromic ammonia gas and/or liquid indicator that can be used outdoors or indoors wherein the color-change can be retained for a sufficient amount of time for a user to find the exact location of a leak.

These indicators are pressure sensitive adhesive (PSA) tapes or self-fusing adhesive tapes that can be wrapped and adhered on pipe joint parts like flanges, connection parts, leak ports, valves etc.

A chemochromic indicator according to the invention is defined in claim 1. Exposure of the indicator to an ammonia compound changes the color of the adhesive layer and/or the chemochromic compound contained therein. In some aspects the ammonia compound can be ammonia gas, hydrous ammonia liquid and /or combinations thereof. In some aspects, the adhesive layer can be a pressure sensitive adhesive layer or a self-fusing adhesive layer. In some aspects, the adhesive layer can comprise a silicone polymer, an acrylic polymer, a urethane polymer, a natural rubber, a synthetic rubber, and / or combinations thereof. In some aspects, the adhesive layer can comprise a silicone polymer and / or acrylic polymer. In some aspects, the copper compound can be copper sulfate ($CuSO_4$), copper nitrate ($CuNO_3$), copper chloride ($CuCl_2$), and / or copper acetate ($Cu(CH_3COO)_2$). In some aspects, the copper compound can be $CuSO_4$ and $CuCl_2$. In some aspects, the copper compound can be $CuSO_4$. In some aspects, the copper compound can be anhydrous or hydrate, or combinations thereof. In some aspects, the indicator can further comprise a contrasting color compound. In some aspects, the contrasting color compound can comprise titanium dioxide ($TiO_2$). In some aspects, the amount of $CuSO_4$ can be equal to or higher than 5 parts per 100 of the adhesive. In some aspects, the thickness of the adhesive layer can be equal to or higher than 30 micro meters thickness. In some aspects, the amount of $CuSO_4$ can be equal to or higher than 10 parts per 100 of adhesive and the thickness of the adhesive layer can be equal to or higher than 30 micro meter thickness. In some aspects, the amount of $CuSO_4$ can be equal to or higher than 10 parts per 100 of organic polymer or adhesive solid part and thickness of organic polymer or adhesive layer is equal to or higher than 40 micro m thickness. In some aspects, the indicator can further comprise a backing layer. In some aspects, the indicator can further comprise a release liner. In some aspects, the indicator can further comprise a second adhesive layer. In some aspects, the chemochromic indicator can have an adhesion higher than 0.5 N/25.4mm.

In some aspects, a method for indicating the presence of ammonia gas is described, wherein the method can comprise contacting ammonia with an adhesive layer comprising a chemochromic indicator described above. In some aspects, indicating the presence of ammonia gas is described, wherein the method can comprise determining a difference between a post-exposure colorimetric state of the chemochromic indicator and a pre-exposure colorimetric state of the chemochromic indicator. In some aspects, the copper compound can be copper sulfate. In some aspects, the adhesive layer can comprise a contrasting color compound.

In some aspects, a method for manufacturing a chemochromic indicator is described, wherein the method can comprise dispersing hydrous or anhydrous $CuSO_4$ in an organic solvent to create a dispersion. In some aspects, a

method for manufacturing a chemochromic indicator is described, wherein the method can comprise sonicating the dispersion so as to create a copper slurry. In some aspects, a method for manufacturing a chemochromic indicator is described, wherein the method can comprise adding the copper slurry to a polymer so as to create a mixture. In some aspects, a method for manufacturing a chemochromic indicator is described, wherein the method can comprise coating the mixture onto a backing layer or release liner for drying and curing. In some aspects, a method for manufacturing a chemochromic indicator is described, wherein the backing layer can comprise polyethylene terephthalate (PET). In some aspects, a method for manufacturing a chemochromic indicator is described, wherein the release liner can be a fluorocarbon release liner.

## Brief Description of the Drawings

Figure 1 is a side cross section of an aspect described herein.

Figure 2 is a side cross section of another aspect described herein.

Figures 3(a-e) show the trend of adhesive thickness & $CuSO_4$ loading amount vs. color retention time in case of platinum catalyst curing silicone adhesive. Loading amount is indicated by percentage as follows: (3a) with 3parts $CuSO_4$, (3b) with 5parts $CuSO_4$, (3c) with 10 parts $CuSO_4$, (3d) with 20 parts $CuSO_4$, and (3e) with 25parts $CuSO_4$. The $\Delta L_{differences}$ of adhesive specimens with a thickness of 20mm, 30mm, and 40mm were measured at initial time (i.e. at zero hours) and over time.

Figures 4(a-e) show the trend of adhesive thickness & $CuSO_4$ loading amount vs. color retention time in the case of acrylic adhesive. Loading amount is indicated by percentage as follows: (4a) with 3 parts $CuSO_4$, (4b) with 5 parts $CuSO_4$, (4c) with 10 parts $CuSO_4$, (4d) with 20 parts $CuSO_4$, and (4e) with 25 parts $CuSO_4$. The $\Delta L_{differences}$ of adhesive specimens with a thickness of 20mm, 30mm, and 40mm were measured at initial time (i.e. at zero hours) and over time.

Figures 5(a-d) show the trend of adhesive thickness & $CuSO_4$ loading amount vs. color retention time in the case of BPO curing silicone adhesive. Loading amount is indicated by percentage as follows: (5a) with 5 parts $CuSO_4$, (5b) with 10 parts $CuSO_4$, (5c) with 20 parts $CuSO_4$, and (5d) with 25 parts $CuSO_4$. The $\Delta L_{differences}$ of adhesive specimens with a thickness of 30mm, 40mm, and 50mm were measured at initial time (i.e. at zero hours) and over time.

Figure 6 shows the adhesion to steel (SUS 304) of silicone adhesive at 30 min. dwell time and pulling speed of 300mm/min. Here, parts per 100 adhesive solid part means weight ratio of anhydrous $CuSO_4$ against solid part weight of adhesive. For instance, if 2g of anhydrous $CuSO_4$ is added in 20g of adhesive that is 40% solids, then the amount of added $CuSO_4$ is 25 parts (anhydrous $CuSO_4$ weight/(adhesive weight $\times$ solid % /100)/100) = 2/((20$\times$0.4)/100) ).

Figure 7 is a side cross section of another aspect described herein.

## Detailed Description of the Invention

It was recognized that organic pH dyes do not have color-change retention property and/or UV stability. A certain amount of time is required to find the exact leak location and hence it is highly desirable for the indicator to retain its color-change even if the gas flow has been stopped. Since ammonia gas or liquid line is often located in an outdoor environment, the indicator needs to be UV resistant. Copper compounds are suitable as chemochromic pigments where their color changes when exposed to ammonia gas (anhydrous ammonia) or liquid ammonia (aqueous ammonia). Especially, $CuSO_4$ (copper sulfate) provides obvious color-change and enough color-change retention time. Since $CuSO_4$ is an inorganic material, it also provides greater stability under UV. $CuSO_4$ is also relatively easy to be added into an adhesive system, especially in a solvent base adhesive system.

By using a colorimeter, the chromaticity of a standard whiteboard is measured. Furthermore, the chromaticity before using the gas detection element is measured. Note that the chromaticity is expressed by the lightness index of the L*a*b* color system (CIELAB1976). The absolute value of the difference is the measured chromaticity between the standard whiteboard and the gas detection element. This value is reported as "$\Delta$L" or "$\Delta$b" for before and after exposure to the ammonia gas.

From the above results the color-change of the gas detection element can be evaluated by the following

equations:

$$\Delta L_{\text{difference}} = |\Delta L_{\text{after}} - \Delta L_{\text{before}}| \quad \text{or} \quad \Delta b_{\text{difference}} = |\Delta b_{\text{after}} - \Delta b_{\text{before}}|$$

Various copper compounds that may provide color-change by ammonia are tested. To recognize color-change with the naked eye on various surfaces, $\Delta L_{\text{difference}}$ (color difference between before and after exposed to ammonia, blackness or whiteness) or $\Delta b_{\text{difference}}$ (color difference between before and after exposed to ammonia, yellowness or blueness) need to be about 5, preferably about 10.

In some aspects, a chemochromic indicator is described, wherein the indicator can comprise an adhesive layer. In some aspects, the indicator can comprise a copper compound. In some aspects, the indicator can comprise a contrasting color compound. In some aspects, the indicator may provide a change in the chemochromic state upon contact with ammonia. In some aspects, the chemochromic indicator can provide a change in the chemochromic state.

In some aspects, as shown in FIGs. 1, 2, and 7 a chemochromic indicator 10 for detecting ammonia compound is described. In one aspect, the chemochromic indicator 10 can comprise an adhesive layer 14 described herein. In some aspects, the adhesive layer 14 can comprise a first side 18 and a second side 20. The chemochromic indicator 10 can comprise a chemochromic copper compound 16. The adhesive layer 14 can be disposed adjacent to one side of a backing layer 8 for monitoring or indicating the presence of ammonia adjacent thereto. In some aspects, a primer may be added between the adhesive layer 14 and the backing layer 8. The indicator 10 can be applied, disposed, and/ or located adjacent the surface of a substrate 30 and / or monitoring location. The substrate 30 can be a conduit transporting a medium containing ammonia therethrough. In some aspects, the adhesive layer 14 can be comprised of the chemochromic copper compound 16 described herein, and the adhesive layer 14, wherein the chemochromic copper compound 16 can be disposed within the adhesive layer 14. In some aspects, a color contrasting compound, e.g., titanium dioxide, can be disposed within the adhesive. In some aspects, the chemochromic indicator 10 can comprise a backing layer 8, wherein the first side 18 of the indicator 10 is disposed adjacent to one side of the backing layer 8. In some aspects, the chemochromic indicator 10 can include a release liner 9 disposed adjacent to the second side 20 of the adhesive layer 14. In some aspects, there may be a plurality of adhesive layers 14, wherein a layer 14 is disposed adjacent to each side of a backing layer 8. In some aspects, there may be a plurality of release liners 9 disposed adjacent to a side of an adhesive layer 14. In some aspects where one or more release liners 9 are used, the liners 9 are removed before application of the chemochromic indicator 10 onto a substrate 30.

In some aspects, the thickness of the adhesive layer 14 can be equal to or higher than 30 micro meters. In some aspects, the thickness of the adhesive layer 14 can be equal to or higher than 40 micro meters.

The structure of the ammonia gas detection indicator as shown in FIGs. 1, 2, and 7 is described below:

**Copper compounds**

According to the invention, the chemochromic indicator comprises a chemochromic copper compound comprising copper sulfate, copper chloride, copper nitrate, copper acetate and/ or mixtures thereof. In some aspects, the copper compound can comprise copper sulfate and/or copper chloride. In some aspects, the copper compound can comprise copper sulfate. In some aspects, the copper compound can be anhydrous. In some aspects, the copper compound can be a hydrate. In some aspects, the copper compound can be combinations of an anhydrous compound and a hydrate. In some aspects, the copper sulfate can comprise anhydrous copper sulfate. In some aspects, the copper compound can be between 1-50 wt % of the copper compound. In some aspects, the copper compound can be 1-50 parts, e.g., between 3-25 parts copper compound. In some aspects, the amount of $CuSO_4$ can be equal to or higher than 5, 10, 20 and or 30 parts per 100 of the adhesive. In some aspects, e.g., copper sulfate, exposure or contact of the copper compound with the ammonia gas, vapor or liquid can result in the formation of tetraamine copper sulfate (II), providing a color change.

In some aspects, the indicator can change to a visually distinct material, e.g., blue or violet, upon exposure to at least 50 ppm, 100 ppm, 150 ppm, 200 ppm, 250 ppm and/ or 500 ppm ammonia in an ambient environment or air (e.g., upon exposure to 110 mL / minute flow rate).

In some aspects, the indicator can maintain a visual change, e.g., at least 50%, 75%, 90% of the initial color change to blue or violet, for a period of at least 12 hours, 24 hours, 48 hours, 120 hours, 168 and/or 240 hours upon exposure to at least 50 ppm, 100 ppm, 150 ppm, 200 ppm, 250 ppm and/ or 500 ppm ammonia in an ambient environment or air (e.g., upon exposure to 110 mL / minute flow rate).

**Adhesive (polymer)**

In some aspects, the chemochromic indicator can comprise an organic polymer layer. In some aspects, the

organic polymer can be an adhesive. In some aspects, the adhesive can be a pressure sensitive adhesive. In some aspects, the adhesive can be a pressure sensitive adhesive tape. In some aspects, the copper compounds, especially copper sulfate, are disposed within an adhesive to create a chemochromic indicator that can detect an ammonia gas/liquid. The polymer can be comprised of natural rubber, synthetic rubber, polyurethane or urethane polymer, silicone polymer, acrylic polymer and/or combinations thereof. Suitable tacky adhesives include, e.g., in some aspects, the adhesive layer can be comprised of a non-tacky material. In some aspects, the adhesive can be a self-fusing tape. In some aspects, the self-fusing tape or self-amalgamating tape can be a non-tacky silicone-rubber, ethylene propylene rubber (EPR) tape and /or polyisobutylene (PIB) rubber tape, e.g., 3M self amalgamating tape, 23 Linered Premium Rubber (EPR) and 130C Linerless Premium Rubber tape (Scotch brand tape, 3M brand tapes, 3M, St. Paul, MN). In some aspects, the indicating layer can comprise a tacky pressure sensitive adhesive layer. One skilled in the art can determine a suitable pressure sensitive adhesive. A suitable pressure sensitive adhesive can be those PSA adhesives known in the art

The kinds of adhesive and crosslinking system do not have to be limited, but conventional knowledge needs to be applied. For instance, if alcohol is used in the adhesive formulation, isocyanate cannot be used as a cross-linker. To cover a variety of applications, the use of silicone based or acrylic based adhesives is preferred. Silicone adhesives provide UV resistance, acid resistance, and/or alkaline resistance. Acrylic adhesives can be designed for specific applications with relative ease. In some aspects, the silicone adhesive can be an aryl and/or aliphatic substituted silicon polymer, e.g., a methyl phenyl and/or a dimethyl silicon polymer (KR3700 (Shin-Etsu, Tokyo, Japan)). In some aspects, the acrylic adhesive can be EXK18-052 (Toyo Ink, America; East Rutherford, NJ, USA). In some aspects, the adhesive can be an silicon adhesive such as MOM.PSA518 (Momentive Performance Materials, Inc, Waterford, NY, USA). In some aspects, the polymeric material can comprise a noble metal or noble metal ion. In some aspects, the noble metal can be platinum. In some aspects, the noble metal can be 0.0001wt% to about 0.01wt% of dry parts of silicone.

In some aspects, the indicating layer can comprise a contrasting color compound. While not wanting to be bound by theory, it is believed that the opacity of the contrasting color compound aids in the visual perception of the chemochromic color change. In some aspects, the color contrasting compound can comprise a white pigment or compound, e.g., barium sulfate (PW5 / BaSO4), lithopone (BaSO4·ZnS), zinc oxide (PW4/ZnO), silica ($SiO_2$), aluminum oxide ($Al_2O_3$), zirconium oxide ($ZrO_4$) and/or titanium oxide (PW6/$TiO_2$). In some aspects, the color contrasting compound can be a transition metal oxide. In some aspects, the transition metal oxide can be a Group 4 transition metal oxide comprised of oxides of titanium, zirconium, hafnium, rutherfordium (Ti, Zr, Hf, Rf), or mixtures thereof. In some aspects, the transition metal oxide can be rutile. In some aspects, the transition metal oxide can be anatase. In some aspects, the transition metal oxide can be titanium dioxide ($TiO_2$) and/or zirconium oxide ($ZrO_4$). In some aspects, the substantially white pigment can comprise titanium oxide and/or barium sulfate (titanium white) . In some aspects, the chemochromic compound, e.g., copper sulfate can change to tetraamine copper (II) sulfate upon contact and / or exposure with an ammonia compound. In some aspects, the ammonia compound can be gaseous, e.g., an ammonia gas and/or ammonia vapor, liquid, e.g., an aqueous solution of ammonia and/or pure liquid ammonia and/or solid. In some aspects, the ammonia compound can be ammonia gas / vapor, hydrous ammonia liquid and or combinations thereof.

**Adhesion of the Chemochromic Indicator**

In some aspects, the chemochromic indicator can have an adhesion to the substrate or desired monitoring location of higher than 0.1 N, 0.25N, 0.5N, 0.75 N, 1.0 N, 5 N, 10 N and /or 20.0 N / 25.4 mm.

Table 27 and Figure 6 show adhesion vs. anhydrous $CuSO_4$ loading amount and thickness of silicone based adhesive indicator layer based on formulation Table 26. When 50 parts of $CuSO_4$ per 100 adhesive solid part were added, the indicator layer lost tackiness and adhesion completely.

In the case of a solvent-base adhesive, 100mm is higher than typical thickness which is restricted by solvent evaporation. Without $CuSO_4$ and $TiO_2$, adhesion to stainless steel was 25.0 N/25.4mm. When 5 parts $TiO_2$ per 100 dry adhesive parts were added, adhesion was 22.3 N/25.4mm at 100mm thickness.

The same result was observed with an acrylic based adhesive (Table 29). When $CuSO_4$ 50 parts per 100 dry adhesive solid part is added, the sample's adhesion was completely lost. In general, to wrap pipes or flanges, about 0.5 N/25mm of adhesion is required at a minimum in order for the indicator to stay on the substrate. If too much $CuSO_4$ is added, the adhesive of the indicator may lose adhesion. Adhesion can be adjusted by formulating the adhesive with a tackifier or softener. However, when adhesion is adjusted with a tackifier or a softener, the curing level needs to be adjusted to minimize the adhesive residue when the indicator is peeled off.

The chemochromic indicator can be comprised of a pressure sensitive adhesive layer or self-fusing adhesive layer. A pressure sensitive adhesive layer maybe preferable because it can be applied on the hole of a leak port easier. A leak port is designed for checking gas leaks. If a leak occurs, gas comes to the hole (example: R Swagelock VCR fitting). If a self-fusing adhesive is utilized, the leak port block itself needs to be wrap with the backside of self-fusing adhesive layer. The chemochromic indicator is expected to be removed and replaced when it there is a color-change or after specific period of time once it is applied. If the pressure sensitive adhesive is used then the adhesive layer must

be laminated with a backing film, otherwise it will be difficult to remove the tape from the substrate.

### Backing film layer

In some aspects, the chemochromic indicator can comprise at least one backing layer. In some aspects, the chemochromic indicator can comprise one backing layer. In some aspects, the chemochromic indicator can comprise plural backing layers. In some aspects, the at least one, one or plural backing layers can be disposed on the first side or second (opposite) side of the adhesive layer with the copper chemochromic compound therein. In some aspects, the backing layer can be interposed between other layers, including the adhesive layer, release liner layer and / or other backing layers. The adhesive layer can be disposed on a backing layer for support. In some aspects, the backing layer is a film. The backing layer can be adhered on the adhesive layer by glue or adhesive. In some aspects, the adhesive layer can be disposed on backing layer. The backing layer needs to be transparent for the color-change of adhesive layer to be observable.

In some industrial applications, the chemochromic indicator can be required to operate in outdoor environments. In some aspects, the chemochromic indicator may further comprise a UV protection and/or absorbing film. In some aspects, the UV protection film can be comprised of a polyimide film. Polyimide films offer an advantage since they filter UV light, which can lead to the protection of the adhesive layer and the chemochromic copper compounds within. However, there is a drawback to using polyimide based films in that they can be damaged if exposed to an alkaline gas or liquid for long periods of time. In leak detection applications, a degraded or fragile film can indicate a chemical gas/liquid leak. In some aspects, a clear film like polyethylene terephthalate (PET), polypropylene, or a clear fluorine base film can be used. Clear film can be preferable because it makes color change detection easier. Fluorine base film (comprising a fluoro carbon polymer such as fluorinated ethylene propylene copolymer (FEP), ethylene tetrafluoroethylene copolymer (ETFE), or polytetrafluoro ethylene (PTFE), polytetrafluoro ethylene hexafluoro propylene copolymer (PFA) and polyethylene have resistance against alkaline. These films have UV resistance. However, since UV can go through film, the film doesn't protect theunderlying adhesive layer. In the case of silicone adhesive, the silicone adhesive itself has UV resistance naturally. If other types of adhesives are used, it is preferable to add UV absorber and/or hindered amine light stabilizers (HALS).

### Release liner

In some aspects, the chemochromic indicator can comprise at least one release liner layer. In some aspects, the chemochromic indicator can comprise one release liner layer. In some aspects, the chemochromic indicator can comprise plural release liner layers. In some aspects, the at least one, one or plural release liner layers can be disposed on the first side or second (opposite) side of the adhesive layer with the copper chemochromic compound therein. In some aspects, the release liner layer can be interposed between other layers, including the adhesive layer, other release liner layers and / or backing layers. In some aspects, the adhesive can be coated on a release liner that is made from paper or polyethylene terephthalate (PET), polyethylene (PE), and / or polypropylene (PP) film. A release liner contains a releasing agent on its surface. Typically, releasing agents are made from silicone polymers and resins. For silicone based adhesives, fluoro silicone polymer can be used as the releasing agent.

If the adhesive layer is coated on a liner which contains a releasing agent on both sides, a single adhesive layer can be provided on the release liner to produce a transfer tape. Transfer tape can be applied on substrates via pressure, and then peeled off the release liner leaving the adhesive layer on the substrate. In case the adhesion is too high, transfer tape type may cause problems after it is applied on the expected leak location since dust and other contaminants can stick on it or when people touch, it is sticky. Self-fusing adhesive is not sticky at room temperature and hence it cannot adhere to the substrate even if pressure is added. However, it can stick on its own backside. To apply self-fusing adhesive on a substrate where a leak is expected, the self-fusing adhesive may need to be fully wrapped around the substrate. A self-fusing adhesive layer can be typically coated on a release liner.

In situations where $CuSO_4$ loading is high, adhesion can be lost. In this case, more than one adhesive layer can be disposed on the indicator adhesive layer. Extra adhesive layer[s] can be coated on the release liner and/or laminated on a pre-made indicator layer coated on backing film.

### $Cu(CH_3COOH)_2$ with platinum cure dimethyl silicone adhesive

Example 1 shows test results of $Cu(CH_3COO)_2$ (copper (II) acetate) when it was mixed with platinum cure dimethyl silicone adhesive. As chemochromic pigments, $Cu(CH_3COO)_2$ had some difficulty to be formulated in an adhesive solution and when exposed to ammonia it provided a $\Delta b_{difference}$ of 6.65. Also, color fading after 2 hrs provided a $\Delta b_{difference}$ of 0.5, which was a relatively fast fading process. However, still it is feasible to be used as the chemochromic compound to detect leak of ammonia gas or liquid.

**$CuNO_3$ with BPO cure methyl phenyl silicone adhesive**

Example 2 shows test result of using $CuNO_3$ as chemochromic compound. Color-change of $CuNO_3$ sample when exposed to ammonia was $\Delta b_{difference}$ of 12.53. $CuNO_3$ coagulated with $TiO_2$ which provided opacity in adhesive to make color-change clear. It can be preferable to have high opacity for easier color-change recognition.

**$CuCl_2$ with BPO cure methyl phenyl silicone adhesive**

Example 3-A shows test result of using CuClz trial in silicone adhesive. As shown in Table 7, CuClz can be used as chemochromic pigment in silicone adhesive if it is added about 5 part per 100 adhesive solid part or more. In case of 0.3 parts, color-change when it was exposed to ammonia was too small ($\Delta L_{difference}$ = 2.23).
Anhydrous CuClz and hydrous CuClz are different in color which are respectively brown and light blue. Because of this difference, color of cured adhesive containing $CuCl_2$, right after it is taken out from the oven (dried situation) and after it is exposed to moisture are different. However, either color does not interfere with color-change by exposing to ammonia.

**$CuCl_2$ with acrylic adhesive**

As shown in Example 3-B, $CuCl_2$ can also be formulated in acrylic adhesive. In this case, adhesive tends to change-color by $CuCl_2$ when formulated. The level of color-change is totally different from the level of color-change due to ammonia exposure and hence, $CuCl_2$ can be used as a chemochromic leak indicator pigment.

**$CuCl_2$ with urethane adhesive**

$CuCl_2$ can also be formulated in urethane adhesive (Example 3-C). In this case, the color change is yellow-white to blue-green.

**CuCh color retention time with BPO cure methyl phenyl silicone adhesive**

Degree of initial color-change and its retention time is influenced by loading amount of $CuCl_2$ and thickness of the adhesive layer. According to result of Table 11 in Example 3-D, equal or higher than 5 parts per 100 dry adhesive solid parts of $CuCl_2$ and adhesive layer thickness of equal or higher than 40 mm are recommended to maintain color-change for over 24hrs.

**$CuCl_2$ UV resistance with BPO cure methyl phenyl silicone adhesive**

Using $CuCl_2$ as chemochromic pigment provides advantage for UV resistance. Example 3-E,Table 12 shows results of UV exposure test. After 400hrs of UV exposure by xenon lamp which is equivalent to about 10 months of outdoor exposure, the indicator's capability to detect ammonia leak with color-change was retained. In comparison the indicator formulated with pH dye bromo cresol green did not exhibit color-change after 400hrs of UV exposure (Experiment 3-F, Table 14). The adhesive layer of the pH dye indicator sample was bubbled which is an indication of adhesive decomposition.
Based on these test results with silicone, acrylic, and polyurethane adhesives, it is safe to assume that natural rubber and synthetic rubber base adhesives can also be formulated with $CuCl_2$.
$CuCl_2$ is considered a corrosive compound and as a result it may require careful handling like wearing safety gloves when product is handled.

$CuSO_4$

Example 4 shows test result of using $CuSO_4$ as chemochromic pigment trial. Unlike $Cu(CH_3COO)_2$, $CuCl_2$ and $CuNO_3$, copper (II) sulfate is not considered a corrosive compound and that is an advantage for handling materials in the process and assuring product's safety as formulated product. Color-change retention time of $CuSO_4$ is better than $Cu(CH_3COO)_2$. Hence, $CuSO_4$ is preferable as chemochromic pigments to be used for ammonia leak indicator. In case of $CuSO_4$, higher amount need to be formulated compared to $CuCl_2$.

**$CuSO_4.5H_2O$ with BPO cure methyl phenyl silicone adhesive**

Copper(II) sulfate pentahydrate ($CuSO_4.5H_2O$, 99.99% Sigma Aldrich) is difficult to dissolve in solvent (Example

4-A). However, it can still be dispersed in alcohol with sonication and added into solvent base adhesive. As an alternative approach, it is feasible to make small particles by grinding in solvent using ball mill, etc. If the particles are fine enough and dispersed in solvent, it can be formulated in solvent base adhesive system.

$CuSO_4.5H_2O$ was formulated in BPO cure methyl phenyl silicone adhesive. This sample showed obvious color-change from white to blue to purple when it was exposed to ammonia. (Example4-A-1)

Anhydrous $CuSO_4$ is preferable to be used since it is easier for the particles to be broken into smaller sizes. When it is formulated, the adhesive color becomes slightly blueish.

Anhydrous $CuSO_4$ is commercially available and during handling, if it is exposed to air for an extended period of time, it can become hydrated. In order to avoid and minimize rehydration during handling, after weighing, enough solvent was added to the powder to achieve full submersion. If methanol or ethanol is used, amount needs to be limited since those solvents make gelling when those are added in solvent base adhesive. IPA is more tolerable by solvent base adhesive. MEK does not, in general, cause gelling.

To make hydrous or anhydrous $CuSO_4$ powder small enough as chemochromic pigment that can be dispersed in organic polymer or adhesive, those can be sonicated or ground in solvent that avoid exposing to moisture in air. Typically grinding is done as it is in air or even if solvent is used, it tends to be dried up. In case of sonication, $CuSO_4$and solvent can be kept in closed vials or bottles. It can avoid anhydrous $CuSO_4$contact to moisture in air. If fine anhydrous $CuSO_4$powder gets moisture, particle size tends to be larger and color becomes blueish. So, using sonication with solvent is better than grinding Chemochromic pigment powder size as average is preferably about 10 mm or smaller more; preferably about 5 mm or smaller to get uniform spread in organic polymer layer or adhesive layer.

**Anhydrous $CuSO_4$ with BPO methyl phenyl silicone adhesive**

Table 17 shows various adhesive formulations made based on commercial anhydrous copper sulfate (Sigma Aldrich) chromophore in BPO methyl phenyl silicone adhesive. Loading amount of anhydrous copper was varied from 5 to 25 parts per 100 of silicone adhesive solid part. Also thickness of dry adhesive was varied from 30- 50 mm. When these samples were exposed to ammonia gas (Method 2) all of adhesives' colors were obviously changed. Table 18 shows $\Delta L$ of color-change when samples are exposed to ammonia.

Table 19 and Figures 3(a-d) shows $\Delta L_{difference}$ of samples from Table 17 . These results show that the $\Delta L_{difference}$ (level of color-change by ammonia exposure) is influenced by anhydrous $CuSO_4$ amount and thickness of adhesive layer. Higher loading of anhydrous $CuSO_4$ and thicker adhesive layer give larger $\Delta L_{difference}$ (obvious color-change). Also, it shows that the color fades time by time albeit its fading speed is much slower than pH dyes that color-change tends to fade away right after ammonia gas is removed.

Scheme 1 shows the color-change reaction between anhydrous copper sulfate (white) and ammonia to yield tetramminecopper sulfate monohydrate (purple, deep blue). For visual detection purposes, a $\Delta L_{difference}$ or $\Delta b_{difference}$ of about 5 after about 24hrs has been targeted (5 is required for the naked eye color-change detection). The $\Delta L_{difference}$ increases as the amount of $CuSO_4$ and adhesive thickness are increased.

$$CuSO_4 + 4NH_3 + H_2O \rightarrow Cu(NH_3)_4SO_4 .H_2O$$

Scheme 1- Anhydrous copper (II) sulfate reaction with ammonia

**Anhydrous $CuSO_4$ with platinum cure dimethyl silicone adhesive**

Anhydrous $CuSO_4$ was added in to Shin-Etsu KR3700 Pt-cure dimethyl silicone adhesive with various loading amount. Table 20 shows formulations. Amount of anhydrous $CuSO_4$ was varied from 3 to 25 parts per 100 dry adhesive solid part. The samples were prepared by varying thickness from 20 to 40 mm. In order to make fine powder to get good dispersion in adhesive, anhydrous $CuSO_4$ was sonicated in IPA and then poured in adhesive solution. Adhesive mixtures were coated on 1mil PET film. Then, dried and cured in 130 °C oven for 3 min. These specimens were exposed to ammonia gas (Method 2) to see color-change and its retention time. The color-change results are presented in Table 21 which shows $\Delta b$, and Table 22 along with Figure 1(a-e) that show $\Delta b_{difference}$ of before and after exposure. Color-change and its retention time is influenced by anhydrous $CuSO_4$ loading amount and adhesive layer thickness. Higher loading and thicker layer provides more obvious color-change and longer retention time. The fading speed of Pt-cure dimethyl silicone adhesive specimens are faster than BPO cure phenyl methyl silicone adhesive specimens.

**Anhydrous $CuSO_4$ with Acrylic adhesive**

Anhydrous $CuSO_4$ was added in Toyoink EXK18-052 acrylic adhesive. BXX4805TX (metal chelate) was used

as crosslinker. Table 23 shows formulation. Amount of anhydrous $CuSO_4$ was varied from 3 to 25 parts per 100 dry adhesive solid part. Thickness was varied from 20 to 40 mm. In order to make fine powder to get good dispersion in adhesive, anhydrous $CuSO_4$ is sonicated in IPA and then poured in adhesive solution. Adhesive mixtures were coated on 1mil PET film and then, dried and cured in 120 °C oven for 3 min. These specimens were exposed to ammonia gas (Method 2) to see color-change and its retention time. Table 24 shows $\Delta b$ and Table 25 along with Figure 2(a-e) show $\Delta b_{difference}$ that show color difference from before exposure. Color-change and its retention time is influenced by anhydrous $CuSO_4$ loading amount and adhesive layer thickness. However, fading speed of color is slower than silicone adhesive. Initial color of adhesive layer before exposing ammonia gas is not greenish like when CuClz is added.

**Anhydrous amount and thickness to maintain color change for over 24hrs, preferably 48hrs**

$\Delta L_{difference}$ or $\Delta b_{difference}$ needs to be maintained about 5 preferably about 10 for at least 24hrs. When $CuSO_4$ is used as chemochromic pigment, color fading occurs. However, the fading process is not as quick as pH dyes.

Table 22 and Figure 1(a-e) show color fading vs time in case of Pt-cure dimethyl siloxane silicone adhesive. Thickness of adhesive layer and $CuSO_4$ were varied. High loading of $CuSO_4$ and thicker adhesive layer provides more color-change when adhesive layer is exposed to ammonia. If initial has more color-change, fading takes more time. Adding high amount of $CuSO_4$lowers adhesion that explained in latter part. If thickness of adhesive layer is too high, it may be bubbling in drying process or adhesive residue may occur when it is peeled off from pipe etc. when it is replaced or peeled off due to color change. So, higher degree of color change needs to be realized by combination of $CuSO_4$loading amount and thickness of adhesive layer.

To assure maintaining color-change at 24hrs, better to evaluate result at 48hrs. If $CuSO_4$ loading is equal or higher than 5 parts per 100 dry adhesive part and thickness is equal or higher than 30 mm, color-change ($\Delta b_{difference}$) can be maintained as about 5 at 48hrs. Test result showed 4.91 as 5 parts per 100 dry adhesive part and thickness 30 mm. This case, definitely, $\Delta b_{difference}$ at 24hrs is higher than 5. Test result showed 8.51 as 5 parts per 100 dry adhesive part and thickness 30 mm. If $CuSO_4$ loading is equal or higher than 10 parts per 100 dry adhesive part and thickness is equal or higher than 30 mm, $\Delta b$ at 48hrs is 9.42. In this case, $\Delta b$ at 24hrs is definitely higher than 10. Test result of $CuSO_4$ loading is 10 parts per 100 dry adhesive part and thickness is 30 mm, $\Delta b$ at 24hrs is 13.57.

To assure maintaining color-change at 48hrs, better to evaluate result at 72hrs. If $CuSO_4$ loading is equal or higher than 10 parts per 100 dry adhesive part and thickness is equal or higher than 30 mm, color-change ($\Delta b_{difference}$) can be maintained as higher than 5 at 72hrs. Test result showed 7.51 as 10 parts per 100 dry adhesive part and thickness 30mm. This case, definitely, $\Delta b_{difference}$ at 48 hers is higher than 5. If $CuSO_4$ loading is equal or higher than 10 parts per 100 dry adhesive part and thickness is equal or higher than 40mm, $\Delta b$ at 72hrs is 17.43. This case, $\Delta b$ at 48hrs is definitely higher than 10.

Table 25 and Figure 2(a-e) show color fading of acrylic adhesive case. In case of acrylic adhesive, color fading speed is slower than silicone adhesive. When $CuSO_4$ loading is 5 parts per 100 dry adhesive part and thickness is 30mm, color-change ($\Delta b_{difference}$) is 12.53 at 48hrs. This is surely higher than 5 or 10 at 24hrs.

In case of acrylic adhesive, color fading speed is slower than silicone adhesive. To assure maintaining color change at 48hrs, better to evaluate result at 72hrs. In case $CuSO_4$ loading is 10 parts per 100 dry adhesive part and thickness is 30mm, color-change ($\Delta b_{difference}$) is 18.98 at 72hrs. This is surely higher than 5 or 10 at 48hrs.

Table 19 and Figure 3(a-d) show color fading of BPO cure methyl phenyl silicone adhesive case. In case of BPO cure phenyl methyl Silone adhesive, color fading speed is almost same as Pt cure dimethyl silicone adhesive. In case $CuSO_4$ loading is 5 parts per 100 dry adhesive part and thickness is 30mm, color-change ($\Delta L_{difference}$) is 5.48 at 48hrs. This is surely higher than 5 at 24hrs. In case $CuSO_4$ loading is 10 parts per 100 dry adhesive part and thickness is 30mm, color-change ($\Delta L_{difference}$) is 9.36 at 48 hrs. This is surely higher than 10 at 24hrs.

To assure maintaining color change at 48hrs, better to evaluate result at 72hrs. In case $CuSO_4$ loading is 10 parts per 100 dry adhesive part and thickness is 30mm, color-change ($\Delta L_{difference}$) is 8.20 at 72hrs. This is surely higher than 5 at 48 hrs. In case $CuSO_4$ loading is 10 parts per 100 dry adhesive part and thickness is 40mm, color-change ($\Delta L_{difference}$) is 13.21 at 72hrs. This is surely higher than 10 at 48 hrs.

**RTV Silicone**

Anhydrous $CuSO_4$ is added in moisture curable silicone rubber (RTV, Example 4-B-6. This silicone layer can be considered as leak indicator. This layer doesn't have any tackiness after it is cured by moisture. When the indicator layer is exposed to ammonia gas, it shows obvious color-change. When exposed to ammonia (Method 2), a $\Delta L_{difference}$ of 27.3 was measured between the before and after color-change. The color-change is from pale blue to dark purple for the adhesive layer.

In general silicone polymers have three types of curing system: addition cure by platinum catalyst, radical reaction by peroxide, and condensation reaction. All three types can be utilized to form the indicator layer.

**Anhydrous ammonia**

Ammonia gas generated from 30% ammonia contains moisture. Example 5-B-5 shows test result of exposing to 7.5% anhydrous ammonia in balance air. Indicator layer (adhesive layer) shows obvious color-change and hence, the indicator is functional even when is exposed to anhydrous ammonia. The $\Delta L_{difference}$ for samples with adhesive thickness of 40mm and 50mm was measured as 19.36 and 21.2, respectively. These results show that both anhydrous ammonia and ammonium hydroxide can provide good color-change and hence be able to be detected.

**Water immersion**

Example 4-B also shows the color-change before and after samples were immersed in water for 12 days. It was observed that the color-change decreased as the thickness decreased. Some loss of $CuSO_4$ from the indicators, due to leaching out into the water, was also observed. $CuSO_4$ has high solubility in water but the hydrophobic nature of silicone adhesive was shown to keep the water away from $CuSO_4$, therefore minimizing its loss in water. Furthermore, the color of the adhesive while it was submerged remained white (i.e. the color blue for hydrated copper sulfate was not observed).

**Liquid ammonia**

Example 4-B-8 shows that when indicator with anhydrous $CuSO_4$ was soaked in 30% aqueous ammonia, color of this indicator layer (adhesive layer) was changed from white to purple/blue. Therefore, this chemochromic indicator can work for ammonia gas and/or liquid ammonia leak detection.

**UV resistance of anhydrous $CuSO_4$**

Example 4-B-7 shows the effect of UV on specimens made from anhydrous $CuSO_4$ in Pt-cure dimethyl silicone adhesive. 20 parts per 100 dry adhesive part of anhydrous $CuSO_4$ was formulated in Pt-cure dimethyl silicone adhesive. This adhesive as coated on 1 mil PET and Polyimide. Coated films are exposed to UV from film side for 600hrs by UV lamp that is about 1-year outdoor exposure. Even after samples are exposed to UV, ammonia detection ability is well maintained (Table 30).

**Comparison**

As comparison, NiClz & $NiSO_4$ were tested as described in comparison. Ni is well known to react with ammonia. NiClz and $NiSO_4$ were formulated in phenyl methyl silicone adhesive SilGrip™ 518. However, those specimens didn't show any color-change when exposed to ammonia.

**Method for indicating ammonia**

In some aspects, a method for indicating the presence of an ammonia compound is described, wherein the method can comprise contacting ammonia with a chemochromic indicator comprising an adhesive layer comprising a chemochromic compound described above. In some aspects upon contact, a color change as described can indicate the presence of ammonia gas. In some aspects, the method can comprise determining a difference between a post-exposure colorimetric state of the chemochromic indicator and a pre-exposure colorimetric state of the chemochromic indicator. In some aspects, the copper compound can be copper sulfate. In some aspects, the adhesive layer can comprise a contrasting color compound.

The method can include obtaining a pre-exposure chemochromic state of the chemochromic indicator. In some aspects the method can comprise obtaining a post-exposure chemochromic state of the chemochromic indicator. In some aspects, the method can comprise determining a difference in a chemochromic state of the chemochromic indicator following the contacting step and determining the presence or absence of a difference in the chemochromic state relative to a pre-exposure chemochromic state or that of a control. Measuring or determining the chemochromic state of a material is optionally performed by one or more of many techniques known in the art. Illustratively, chemochromic state is determined by visual inspection. Optionally, a chemochromic state is determined using a spectrometer, optionally a Fourier transform infrared (FTIR) spectrometer, to determine chemochromic state of the sorbent at one or multiple wavelengths or ranges of wavelengths. Illustrative examples of such spectroscopic techniques can be found in Peterson, et al., Industrial & Engineering Chemistry Research, 2013; 53:701-707. Other illustrative methods for measuring or determining the presence or absence of a difference in chemochromic state include UV/V is spectrometry, photoluminescence, luminescence, and fluorescence.

In some aspects, the post-exposure chemochromic state is used to determine or measure chemochromic indicator contact with or exposure to ammonic, and optionally to quantify the amount of ammonia thereof that has contacted the sorbent by comparison to a pre-exposure chemochromic state or control. A pre-exposure chemochromic state can be measured prior to a chemochromic indicator contacting an ammonia compound using the same techniques as are used for measuring a post-exposure chemochromic state. An altered chemochromic state indicates that the chemochromic indicator has contacted an ammonia compound. A chemochromic state can be optionally altered in transmission at one or more wavelengths, reflection at one or more wavelengths, absorption at one or more wavelengths, or fluoresces or luminescence at one or more wavelengths. In some aspects, the post-exposure chemochromic state can be compared to a control. A control can be a chemochromic state of a pre-exposure chemochromic indicator similar or identical chemochromic indicator contacted with the ammonia compound. A difference between a post-exposure chemochromic state and a pre-exposure chemochromic state or control allows for the sensing or quantifying contact of a chemochromic indicator with an ammonia compound or other environmental condition.

A chemochromic state is a spectral condition of a sorbent. A chemochromic state is observable, and optionally quantifiable, visually or using instrumentation. A chemochromic state is observed as a color, a spectral pattern, an intensity of spectral emission(s), or combinations thereof.

In some aspects the color altering layer may have the following parameters: L*--Lightness Value, a*--position on red-green axis, and b*--position on yellow-blue axis.

$$\Delta E^* = \{(L-L')^2+(a-a')^2+(b-b')^2\}½$$

The equation above can be used in a standard measurement with which to compare different samples' color changes. The greater the ΔE* value, the greater the color contrast. The chemochromic films can be analyzed both before and after exposure to ammonia, allowing quantification of the intensity of color change.

In some aspects, the color altering layer may have the following parameters:

$$\Delta L_{\text{difference}} = \left| \Delta L_{\text{after}} - \Delta L_{\text{before}} \right| \quad \text{or} \quad \Delta b_{\text{difference}} = \left| \Delta b_{\text{after}} - \Delta b_{\text{before}} \right|$$

**Method for making ammonia indicator**

In some aspects, a method for manufacturing the aforedesecribed chemochromic indicator is described, the method can comprise dispersing hydrous or anhydrous $CuSO_4$ in an organic solvent to create a dispersion. In some aspects, a method for manufacturing a chemochromic indicator is described, the method can comprise sonicating the dispersion so as to create a copper slurry. In some aspects a method for manufacturing a chemochromic indicator is described, the method can comprise adding the copper slurry to a polymer so as to create a mixture. In some aspects a method for manufacturing a chemochromic indicator is described, the method can comprise coating the mixture onto a backing layer or release liner for drying and curing. In some aspects a method for manufacturing a chemochromic indicator is described, the backing layer can comprise polyethylene terephthalate (PET). In some aspects a method for manufacturing a chemochromic indicator is described, the release liner can be a fluorocarbon release liner. One suitable example includes mixing a compound of about 20 wt% Silicon polymer, 0.06 wt% Pt, 0.6 wt% $TiO_2$, 5 wt% MEK; 1.8 wt% $CuSO_4$; 6.98 wt% IPA and 2.4 wt% toluene. In one suitable example, the mixing compound has been sonicated. In one suitable example, the substituents therein can be uniformly dispersed throughout the mixing compound.

In some aspects, the method can comprise adding a release liner layer to the free side of the chemochromic indicator and / or adhesive. In some aspects, the release liner can be formed from a polyester-based resin. In some aspects, the release linerlayer can be a fluorocarbon release liner.

**Example 1**

**Using $Cu(CH_3COO)_2$ as Chemochromic Pigments**

Silicone adhesive was used to test if copper (II) acetate ($Cu(CH_3COO)_2$, 98%, Alfa Aesar) can be used as a chemochromic pigments since it has UV resistance and wider temperature usage range.

In general, solvent base adhesive contains non-polar solvents like xylene and toluene. For the formulation, it is highly critical to know about the solubility of each component. Table 2 shows attempts that were made to dissolve various percentages of $Cu(CH_3COO)_2$ in different solvents.

*Table 2- Solubility of $Cu(CH_3COO)_2$*

| **Solvent (%$Cu(CH_3COO)_2$)** | **Result** |
|---|---|
| MEK (5%) | Blue solution, Majority settled |
| IPA (5%) | Blue solution, Majority settled |
| MeOH (5%) | Better solubility, couldn't dissolve all |
| MeOH (2%) | Better solubility, couldn't dissolve all |
| MeOH (1%) | With sonication all were dissolved (based on naked eye. Next day fine powder settlement was observed) |
| EtOH (1%) with sonication | All were dissolved (next day, settlement was not observed) |
| EtOH (2%) with sonication | Not all were dissolved, settlement was present |

In general, the solubility of $Cu(CH_3COO)_2$ in non-polar solvent like toluene that can be formulated in an adhesive does not appear to be good. As shown in Table 2, $Cu(CH_3COO)_2$ could be dissolved in ethanol as 1% solution. It was assumed that adding 3 to 20 parts of $Cu(CH_3COO)_2$ per 100 of adhesive solid part was required to get sufficient color-change. In the case of 1% solution and in order to introduce sufficient amount of copper to the test sample, very high amount of ethanol was added into the adhesive solution. This caused gelling of the silicone adhesive, which does not provide proper coating properties. Table 3 shows the formulation and gas exposure test results for $Cu(CH_3COO)_2$ in Pt-cure dimethyl silicone adhesive.

*Table 3- Formulation and gas exposure test result for $Cu(CH_3COO)_2$ in Pt-cure dimethyl silicone adhesive*

| | |
|---|---|
| Curing temperature (°C) | 130 |
| Curing time (min.) | 3 |
| Backing film | 92 gauge (0.023 mm) Clear PET |
| Adhesive thickness when Dry (mm) | 45 |
| ShinEtsu KR3700(g) (60% solids) | 20 |
| CAT-PL-50T (g) | 0.06 |
| Toluene (dilute CAT-PT-50T) (g) | 0.54 |
| Toluene | 2 |
| $TiO_2$ (g) | 0.6 |
| MEK (g) | 2 |
| MEK Rinse | 0.5 x 2 |
| $Cu(CH_3COO)_2$ (g) | 1.8 |
| MEK (g) | 16 |
| MEK Rinse (g) | 1x2 |
| Ammonia exposure result (adhesive) | Obvious color change from green to brown |
| $\Delta$b before exposing to ammonia | 6.18 |
| $\Delta$b after exposing to ammonia | 12.83 |
| $\Delta$b difference (initial) | 6.65 |
| $\Delta$b 2hrs after exposing to ammonia | 5.68 |
| $\Delta$b difference (2hrs after) | -0.5 |

**Formulation:** 1.8 g of $Cu(CH_3COO)_2$ was added to 16g of MEK in a 30 ml glass vial and was sonicated to disperse all $Cu(CH_3COO)_2$ by ultrasonic cleaner Branson 200 (Emerson, MO USA) for 5 min. two times to break down

particles and to disperse in solvent. 10g of solution part was taken and left for one day. Then, fine green powder was precipitated. This fine powder was small enough in particle size to be added into the adhesive formulation. In order to minimize the amount of added MEK in the adhesive solution, the liquid part of the solution was taken out as much as possible. Then, toluene (30 g) was added. The slurry was left for 2 days. Again, the liquid part of the solution was taken out as much as possible (about 10 g solution remained). Although the exact amount of $Cu(CH_3COO)_2$ that remained for the formulation was unknown in this case, it is possible to weigh the amount of $Cu(CH_3COO)_2$ in the removed solvent after it is dried.

Titanium dioxide ($TiO_2$, rutile, Sigma-Aldrich) was added into the $Cu(CH_3COO)_2$ slurry and sonicated using an ultrasonic cleaner (Branson 200) for 5 min. CAT-PT-50T (0.06 g) and toluene (2.54g) were added to the KR3700 adhesive (20g) and mixed. Then, $Cu(CH_3COO)_2$ and $TiO_2$ slurry were added to the adhesive and mixed.

It is preferable for the adhesive to contain $TiO_2$ in order to increase opacity so that when the tape is exposed to ammonia, the color-change is more easily recognizable. To avoid coagulation of $TiO_2$ in the adhesive, it is preferable to first disperse $TiO_2$ in the solvent and then mix with the adhesive. In case of hydrophilic $TiO_2$, using MEK is most preferable if compatibility with adhesive is considered.

Using Method 1, this adhesive was coated on 92-gauge PET (Melinex-S, DuPont Teijin Films, Virginia USA) to create a coated sample. Coagulation of $Cu(CH_3COO)_2$ was observed on the adhesive layer.

A specimen (35 mm × 35 mm) was cut from the coated sample. This specimen was exposed to ammonia gas test Method 2.

## Example 2

### Using $CuNO_3$ as Chemochromic Pigments

For a formulation, it is highly critical to know about the solubility of each component. Table 4 shows attempts that were made to dissolve various percentages of copper (II) nitrate ($CuNO_3$, 99%, Acros Organics) in different solvents.

*Table 4- Solubility of $CuNO_3$*

| Solvent (%$CuNO_3$) | Result |
|---|---|
| MEK (50%) | Not soluble |
| MEK (33%) | Not Soluble |
| MEK (25%) | Soluble |
| IPA (25%) | Soluble |

$CuNO_3$ can be dissolved in IPA or MEK in certain solid % (25%) at room temperature. In the case of mixing with a silicone adhesive, it is preferable to use MEK for better compatibility. MEK was used for this formulation. Table 5 shows the formulation and gas exposure test results for $CuNO_3$ in BPO-cure methyl phenyl silicone adhesive.

*Table 5- Formulations and Gas Exposure Test Results for $CuNO_3$ in BPO-cure methyl phenyl silicone adhesive*

| | |
|---|---|
| Curing temperature (°C) | 177 |
| Curing time (min.) | 3 |
| Backing film | 1 mil Polyimide |
| Adhesive thickness when dry (mm) | 50 |
| SilGrip™ 518 (55.5%) (g) | 4.688 |
| BPO (g) | 0.063 |
| Toluene (BPO solving) (g) | 1.000 |
| Toluene rinse (g) | 0.500 |
| $TiO_2$ (g) | 0.150 |
| MEK Rinse (g) | 0.5 x2 |
| Extra Toluene (g) | 1.000 |

(continued)

| | |
|---|---|
| $CuNO_3$ (g) | 1.04 |
| MEK (dissolve $CuNO_3$) (g) | 3.12 |
| Ammonia exposure result (adhesive) | Obvious color change from green to Purple |
| $\Delta L$ before exposing to $NH_3$ | 32.94 |
| $\Delta L$ after exposing to $NH_3$ | 45.47 |
| $\Delta L_{difference}$ | 12.53 |

**Formulation :** BPO was dissolved in toluene in a small container and poured into the SilGrip™ 518 adhesive. The small container was rinsed with toluene, poured into the adhesive again and mixed to create an adhesive mixture. $CuNO_3$ was dissolved in MEK as 25% at R.T. 4.16 g of $CuNO_3$ solution was weighed in a 30 ml glass vial. $TiO_2$ was weighed and added into this vial. In order to get good dispersion, this $TiO_2$ and $CuNO_3$ solution was sonicated for 5 min. After sonication was done, this slurry was poured into the adhesive mixture. The vial was rinsed with 0.5 g MEK two times and the rinse was mixed into the adhesive mixture. However, some part of the adhesive mixture gelled. 1 g toluene was added to the adhesive mixture to make it smooth.

This adhesive mixture was coated on 1 mil polyimide film so as to achieve a dried adhesive thickness of 50 mm using Method 1. The sample was air dried for 3 min., and then cured at 177 °C for 3 min., resulting in a coated sample from which several specimens were cut. The adhesive layer had many tiny spots that suggests that the $TiO_2$ and $CuNO_3$ are coagulated. Some interaction between the $TiO_2$ and $CuNO_3$ was noticed. Since the $TiO_2$ was coagulated, the coated sample had lost some opacity. As a result, color change recognition was not as good as that of a highly opaque adhesive layer. However, color change was still noticeable. When one specimen from the coated sample was exposed to ammonia (Method 2), the initial $\Delta L$ before it was exposed to ammonia was 32.94, and the $\Delta L$ after it was exposed to ammonia was 45.47. The $\Delta L_{difference}$ was calculated as 12.53. It is preferable for the $\Delta L_{difference}$ to be equal to about 5 upon detection so that the color-change can be more easily recognized by the naked eye. More preferably $\Delta L_{difference}$ to be equal to about 10. Therefore $\Delta L_{difference}$ of 12.53 is enough. However, due to less opacity, it is not easy to recognize color-change, especially on darker color background (on darker color painted pipes, etc.).

**Example 3**

**Using $CuCl_2$ as chemochromic pigments**

Copper (II) chloride, $CuCl_2$, can chemochromically react with ammonia or $H_2S$. In order to add $CuCl_2$ to an adhesive uniformly, it was considered to dissolve $CuCl_2$ in a solvent, and then mix with the adhesive. Table 6 shows attempts that were made to dissolve various percentages of $CuCl_2$ in different solvents.

*Table 6 - Solubility of $CuCl_2$*

| **Solvent (% $CuCl_2$)** | **Result** |
|---|---|
| IPA (5%) | Not soluble at R.T. At 70° C, solution could be made. |
| Ethanol (10%) | Solution can be made at R.T. |
| Methanol (20%) | Solution can be made at R.T. |
| Xylene (5%) | Even at 80° C, solution could not be made. |
| Toluene (5%) | Even at 80 °C, solution could not be made. |
| MEK (0.5%) | Even at 80 °C, solution could not be made. |

**3-A) Formulated $CuCl_2$ in silicone adhesive:** Based on the solubility study results, dissolving $CuCl_2$ (99%, Sigma Aldrich) in ethanol or methanol was preferable. However, when $CuCl_2$ solution was made with ethanol or methanol and added to a silicone adhesive (SilGrip™ 518 methyl phenyl silicone BPO cure type), the adhesive mix gelled. No gelling was observed when only methanol or ethanol were added in the adhesive and mixed (up to certain ratio). The presence of $CuCl_2$ and BPO (benzoyl peroxide) enhanced gelling. Although the solubility of $CuCl_2$ was lower, it was preferable to dissolve it in IPA instead of using ethanol or methanol. IPA can be mixed with silicone adhesive up to certain amount. When IPA was used to dissolve $CuCl_2$, even in the presence of $CuCl_2$ or BPO, gelling up of the adhesive

was not observed. Table 7 presents the adhesive mixing formulation and test results for coated samples containing $CuCl_2$.

*Table 7 - $CuCl_2$ Adhesive mixing formulation and test results*

| | | |
|---|---|---|
| Curing temperature (°C) | 177 | 177 |
| Curing time (min.) | 3 | 3 |
| Backing film | 1 mil Polyimide | 1 mil Polyimide |
| Adhesive thickness when dry (mm) | 40 | 40 |
| SilGrip™ 518 (55.5%) (g) | 4.7 | 4.7 |
| BPO (g) | 0.063 | 0.063 |
| Toluene (BPO dissolving) (g) | 0.63 | 0.63 |
| Toluene (g) | 1.0 | 1.0 |
| $TiO_2$ (g) | 0.15 | 0.15 |
| MEK disperse (g) | 1.0 | 1.0 |
| MEK Rinse (g) | 0.5 x 2 | 0.5 x 2 |
| $CuCl_2$ (g) | 0.13 | 0.008 |
| IPA (g) | 2.47 | 2.47 |
| Ammonia exposure result (adhesive) | Obvious color change from white to green | Slightly darker Not obvious |
| ΔL before exposing to ammonia | 27.43 | 29.09 |
| ΔL after exposing to ammonia | 43.69 | 31.32 |
| $\Delta L_{difference}$ | 16.26 | 2.23 |

**Formulation:** SilGrip™ 518 (4.7 g) adhesive was weighed. BPO (0.063 g) was weighed and it was dissolved in toluene (0.63g) before it was poured into the SilGrip™ 518 adhesive. The BPO container was rinsed with 0.5 g toluene two times. Each time, the rinse was poured into the adhesive and mixed.

CuClz (0.13 g or 0.008 g) and IPA (2.47 g) are added in a 30mL glass vial and then heated up in a 70 °C water bath. The vial was swirled slowly from time to time until the $CuCl_2$ was dissolved completely. Once all of the $CuCl_2$ was dissolved, the glass vial was taken out from the water bath and cooled down. In the case of 5% in IPA, even after the vial was cooled down, the $CuCl_2$ stayed in solution.

0.15 g of $TiO_2$ was weighed in a 30 mL glass vial and MEK (1 g) was added in. This glass vial that has $TiO_2$ and IPA was sonicated for 5 min. using an ultrasonic cleaner (Branson 200). After the sonication was done, this slurry was poured into a SilGrip™ 518 adhesive that has BPO. The vial was rinsed with 0.5 g MEK two times. Each time, the MEK was poured into the SilGrip™ 518 adhesive.

The SilGrip™ 518 adhesive that has BPO, $TiO_2$ and $CuCl_2$ in the solution was mixed well to provide an adhesive mixture. The adhesive mixture was coated on a 1 mil polyimide film as thickness of dried adhesive, 40 mm using Method 1. When this sample was exposed to ammonia gas as test Method 2, color of adhesive was changed from white to blue. This blue color was changed to green over time.

Loading amount of $CuCl_2$ are 5 parts per 100 dry adhesive solid part and0.3 parts per 100 dry adhesive solid parts. For ammonia leak detection, higher amount of $CuCl_2$ loading is better.

**3-B) Formulated $CuCl_2$ in acrylic adhesive:** Table 8 shows the formulation and gas exposure test results for acrylic-based $CuCl_2$ containing Indicators.

*Table 8 - $CuCl_2$ Formulation in Acrylic Adhesive*

| **$CuCl_2$ ratio (parts per 100 of silicone adhesive solid part)** | **5** | **5** | **5** |
|---|---|---|---|
| Cure temperature (°C) | 120 | 120 | 120 |
| Cure time (min.) | 3 | 3 | 3 |
| Backing film | 1 mil polyimide | 1 mil polyimide | 1 mil polyimide |

(continued)

| $CuCl_2$ ratio (parts per 100 of silicone adhesive solid part) | 5 | 5 | 5 |
|---|---|---|---|
| NXT-533 (solid 48%) (g) | 20 | - | - |
| EXK18-052 (solid 50%) (g) | - | - | 10.4 |
| NXT 800 (solid 34%) (g) | - | 20 | - |
| $TiO_2$ (g) | 0.48 | 0.34 | 0.26 |
| MEK disperse (g) | 3 | 3 | 2 |
| MEK Rinse (g) | 1 | 1 | 1 |
| $CuCl_2$ (g) as IPA 5% solution (g of $CuCl_2$) | 0.48 | 0.34 | 0.26 |
| IPA (g) | 9.12 | 6.46 | 4.94 |
| Adhesive thickness when dry | 45 mm | 40 mm | 40 mm |
| Color of adhesive right after sample was cured in oven | Some are greenish | Some are greenish | Clear |
| Ammonia gas exposure | Obvious Green | Obvious Green | Obvious Green |

**Formulation:** $CuCl_2$ and IPA were put in a 30 ml glass vial as 5% solution. This vial was heated up in a 70° C water bath so as to dissolve the $CuCl_2$ completely. After it was dissolved, the solution was cooled down to R.T. $TiO_2$ and MEK were weighed and put into the 30 ml glass vial. This glass vial was sonicated for 5 min. This $TiO_2$ solution was poured into a weighed acrylic adhesive. The vial was rinsed with MEK, which was then added to the acrylic adhesive. The $CuCl_2$ solution was added into the acrylic adhesive. Then, all were mixed together well.

This mixed adhesive was coated on several 1 mil polyimide films (Method 1). After the coated films were air dried for about 3 min., they were placed in an oven at 120° C for 3 min. to dry and cure. Both NXT-533 (Toyo Ink, TX USA) and NXT800 (Toyo Ink) comprise acrylic polymer, crosslinker (metal chelate), and inhibitor solvent. When the inhibitor solvent is evaporated, the acrylic polymer can be cured. EXK18-052 (Toyo Ink) comprises only the acrylic polymer that is used for NXT-533 and it does not contain crosslinker and inhibitor solvent.

When each adhesive sample was taken out from the oven, the adhesive's color for some of the coated samples was slightly green. When a sample was left in ambient condition, gradually, the adhesive color changed into green even without the presence of ammonia gas. When $CuCl_2$ was added into just the acrylic polymer EXK18-052, the color of the sample did not appear greenish. However, when this tape sample was dipped in water for 24hrs, the adhesive color changed to green. This green color may avoid leak detection by color-change.

In this specific case, this greenish color was caused by the chemical interaction between the acrylic polymer and $CuCl_2$, and not by curing agent.

**3-C) Formulated $CuCl_2$ in urethane adhesive:** Table 9 shows the formulation and gas of urethane-based indicator with $CuCl_2$.

*Table 9 - $CuCl_2$ and Urethane Adhesive Formulation*

| $CuCl_2$ ratio (parts per 100 of silicone adhesive solid part) | 5 |
|---|---|
| Curing temp (°C) | 100 |
| Curing time (min.) | 3 |
| Backing film | 2 mil PET |
| Av. adhesive thickness as dry (mm) | 45 |
| SPUR 1015 (g) | 10 g |
| Tytan S6 (g) | 0.1 g |
| $CuCl_2$ (g) | 0.5 |
| IPA (g) | 19.5 |

(continued)

| $CuCl_2$ ratio (parts per 100 of silicone adhesive solid part) | 5 |
|---|---|
| $TiO_2$ (g) | 0.25 |
| MEK disperse (g) | 2.0 |
| MEK rinse (g) | 1.0 |
| Ammonia exposure result (adhesive) | Obvious color change from yellow white to blue-green |

**Formulation:** 0.5 g $CuCl_2$ and 19.5 g IPA was weighed and put into a 30 ml glass vial as 2.5% solution. This vial was heated up in a 70° C water bath to dissolve the $CuCl_2$ completely. After it was dissolved, the solution was cooled down to room temperature.

Ethylacetoacetate titanate (Tytan S6, Borica Co. Ltd, Taiwan) was weighed and put into a silylated polyurethane (SPUR 1015, Momentive, NY USA). $TiO_2$ (0.25g) and MEK (2.0g) were weighed and put into a glass vial. This vial was sonicated for 5 min. and poured into the SPUR 1015 silylated polyurethane. The vial was rinsed with 1g MEK which was again poured into the SPUR1015 silylated polyurethane. The $CuCl_2$ solution was added into the SPUR1015 silylated polyurethane. Then, all were mixed well. This adhesive mixture was coated on 2mil (0.0508 mm) PET film with a thickness of 45μm when it was dried and cured. Curing temperature was 100 °C for 3 min.

The ammonia gas exposure test was carried out (Method 2) and it showed an obvious color change.

**3-D) Color retention time:** Existing chemochromic gas indicators for ammonia do not retain their color change. If gas flow is stopped, the color reverts back. This is not helpful to determine the exact location of the leak since gas tends to be stopped after it is noticed by a gas pressure drop or detected by an area sensor. Therefore, it is preferable if a detection tape's color change remains for 2 to 6hrs, preferably for over 24hrs.

*Table 10 - Formulations for color retention test of $CuCl_2$ in BPO-cure silicone adhesive*

| $CuCl_2$ ratio (parts per 100 of silicone adhesive solid part) | 1 | 3 | 5 |
|---|---|---|---|
| Curing temperature (°C) | 177 | 177 | 177 |
| Curing time (min.) | 3 | 3 | 3 |
| Backing film | 2 mil PET | 2 mil PET | 2 mil EPT |
| SilGrip™ 518 (55.5%) (g) | 4.69 | 4.69 | 4.69 |
| BPO (g) | 0.063 | 0.063 | 0.063 |
| Toluene (g) | 0.625 | 0.625 | 0.625 |
| $TiO_2$ (g) | 0.15 | 0.15 | 0.15 |
| MEK dispersion (g) | 0.7 | 0.7 | 0.7 |
| MEK rinse (g) | 2.5 | 2.5 | 2.5 |
| Extra MEK (g) | 1.0 | 1.0 | 1.0 |
| $CuCl_2$ (g) | 0.026 | 0.078 | 0.130 |
| Ethanol (g) | 0.234 | 0.702 | 1.17 |
| Av. adhesive thickness (mm) | 55 | 50 | 30, 40 ,65 |

**Formulation:** $CuCl_2$ and ethanol were weighed and added into a 30ml glass vial as 10% solution. It was mixed slowly until it was dissolved. SilGrip™ 518 adhesive was weighed. BPO was dissolved in toluene. $TiO_2$ (0.15g) and MEK (0.7g) were weighed in a glass vial. $CuCl_2$ solution was also weighed and added into the same vial. This glass vial was sonicated for 5 min. and then poured into the SilGrip™ 518 adhesive. The vial was rinsed two times and the rinse was added to the adhesive. All were mixed together. This adhesive was coated on 2mil PET using Method 1 and air dried for about 3 min at R.T. and then dried and cured at 177° C for 3 min.

The $CuCl_2$ loading amount was varied as 1, 3, and 5 parts per 100 SilGrip™ 518 adhesive solid part to respectively create formulation samples of Table 10. Also, with regard to adhesive mix with 5 parts $CuCl_2$, the average (Av.) thickness of the adhesive was varied as to 30mm, 40mm, and 65mm. The samples were exposed to ammonia for 10 min. The $\Delta L$ was measured at the initial point, after 2hrs, 6hrs, and 24hrs in order to calculate the $\Delta L_{difference}$ (Table 11). When the

ΔL was measured, a 1mil polyimide film was placed on each sample to measure the color change as a black and white difference.

*Table 11 - ΔL Difference for initial and fading rate by varying $CuCl_2$ amount and adhesive thickness*

| **$CuCl_2$ ratio (parts per 100 of silicone adhesive solid part)** | **1** | **3** | **5** | **5** | **5** |
|---|---|---|---|---|---|
| Av. adhesive thickness (mm) | 50 | 50 | 30 | 40 | 65 |
| $\Delta L_{difference}$ Initial | 7.81 | 13.62 | 10.75 | 14.67 | 19.93 |
| $\Delta L_{difference}$ 2hrs | 3.45 | 5.85 | 4.69 | 6.97 | 12.36 |
| $\Delta L_{difference}$ 6hrs | 3.18 | 4.43 | 3.83 | 5.66 | 10.22 |
| $\Delta L_{difference}$ 24hrs | 2.64 | 4.67 | 4.54 | 5.99 | 9.93 |

**3-E) UV resistance**

*Table 12 - Formulation for UV resistance study $CuCl_2$ in BPO-cure silicone adhesive specimen*

| **$CuCl_2$ ratio (parts per 100 of silicone adhesive solid part)** | **5** |
|---|---|
| Curing temperature (°C) | 177 |
| Curing time (min.) | 3 |
| Backing film | 1 mil polyimide |
| Av. thickness of adhesive as dry (mm) | 45 |
| SilGrip™ 518 (55.5%) (g) | 9.375 |
| BPO (g) | 0.125 |
| Toluene (g) | 1.25 |
| $TiO_2$ (g) | 0.3 |
| MEK disperse (g) | 3 |
| MEK Rinse (g) | 4 |
| $CuCl_2$ (g) | 0.26 |
| Ethanol (g) | 2.34 |

**Formulation:** $CuCl_2$ and ethanol were weighed and put into a 30 ml glass vial. This vial was heated up in a 70° C water bath in order to dissolve the $CuCl_2$ completely. Once it was dissolved, then the solution was cooled down to room temperature.

A SilGrip™ 518 adhesive was weighed. BPO was weighed and dissolved in toluene, then added into the SilGrip™ 518 adhesive. $TiO_2$ and MEK were measured and put into the 30 ml glass vial. This vial was sonicated for 5 min. and poured into the SilGrip™ 518 adhesive. The vial was rinsed with MEK, which was then poured into the adhesive and mixed. The adhesive was coated on 1 mil polyimide film using Method 1. After the adhesive was air dried for about 3 min., then it was dried and cured in a 177° C oven for 3 min.

**3-F) Comparison with pH dye BCG**

*Table 13 - Formulation for UV resistance study with pH dye BCG*

| | |
|---|---|
| Curing temperature (°C) | 177 |
| Curing time (min.) | 3 |

(continued)

| | |
|---|---|
| Backing film | 1 mil polyimide |
| Av. thickness of adhesive as dry (mm) | 45 |
| SilGrip™ 518 (55.5%) (g) | 75 |
| BPO (g) | 1 |
| Toluene (g) | 10 |
| $TiO_2$ (g) | 2.45 |
| MEK disperse (g) | 15 |
| MEK rinse (g) | 10 |
| Bromo cresol green (g) | 0.15 |
| MEK (g) | 2.85 |

**Formulation:** Bromo cresol green (0.15 g) was dissolved in (2.85 g) MEK. SilGrip™ 518 adhesive (75.0 g) was weighed. BPO (1g) was weighed and dissolved in 10g toluene. $TiO_2$ (2.45g) and MEK (15g) were weighed and sonicated for 5 min. The BPO solution, BCG solution, and $TiO_2$ solution were added into the SilGrip™ 518 adhesive and all were mixed together to achieve an adhesive mixture. This adhesive was coated on a 1 mil polyimide film. After it was air dried for about 3min., it was dried and cured in a 177° C oven for 3 min.

The samples were exposed to UV in a sunshine weather-ometer (Super xenon weather meter SX-75, 7.5KW xenon arc lamp, Suga test instrument Co. Japan) for 100hrs & 400hrs. UV was irradiated from the polyimide backing film side.

Then, the samples were exposed to ammonia gas (Method 2) and the ΔL difference was measured (Method 3)

*Table 14 - $\Delta L_{Difference}$ for UV-exposed specimens with $CuCl_2$ and BCG after ammonia exposure*

| Formulation | $CuCl_2$ (Table 12) | BCG (Table 13) |
|---|---|---|
| Initial $\Delta L_{difference}$ | 14.93 | 15.59 |
| $\Delta L_{difference}$ after 100 hrs | 14.69 | 13.76 |
| $\Delta L_{difference}$ after 400 hrs | 16.14 | 2.2 |

Table 14 shows that the specimen with BCG was decomposed by UV before 400 hrs. As a result, the ammonia exposure test (Method 2) didn't show significant color-change ($\Delta L_{difference}$ = 2.2, Method 3). On the contrary, the specimen with $CuCl_2$ still showed good color-change for ammonia exposure after 400hrs UV exposure ($\Delta L_{difference}$ = 16.14). Although the majority of UV was filtered out by polyimide, the BCG sample still couldn't withstand the UV exposure.

**Example 4**

**Copper (II) Sulfate as Chemochromic Pigments**

**4-A) $CuSO_4.5H_2O$**

In order the examine the efficiency of copper (II) sulfate pentahydrate ($CUSO_4.5H_2O$, 99.99% Sigma Aldrich) in the chemochromic detection of ammonia gas, it is preferable to add it to an adhesive in a uniform way. Therefore, the solubility in different solvents had to be studied (Table 15).

*Table 15 - $CUSO_4.5H_2O$ solubility study*

| Solvent (%$CuSO_4.5H_2O$) | Result |
|---|---|
| Methanol (0%) | Not soluble at R.T. |
| Ethanol (20%) | Not soluble at R. T. The precipitation was mostly white with some blue crystals. |
| Ethanol (2%) | Sonicated, not soluble. White precipitation and cloudy. |

(continued)

| Solvent (%$CuSO_4.5H_2O$) | Result |
|---|---|
| Isopropanol (20%) | Not soluble and no white precipitation. |
| Toluene (20%) | Not soluble and no white precipitation. |
| Water (40%) | Soluble at R.T. |
| % in ( ) is weight % of $CuSO_4.5H_2O$ in each solvent that was confirmed as soluble. | |

The solubility of $CuSO_4.5H_2O$ in organic solvents is very low but it has good solubility in water. These formulations presented a gelling challenge due to extra water of hydration on the copper sulfate particles. The water of hydration on $CuSO_4.5H_2O$ causes the polarity of the adhesive mixture to be increased and hence causes gelation. When $CuSO_4.5H_2O$ is not soluble in MeOH at R.T. but when mixed the hydroxyl of methanol behave the same as water of hydration and cause gelation. Sonication of $CuSO_4.5H_2O$ in ethanol (EtOH) caused the blue particles to change to white fine powder. But even after washing this powder with IPA, the high surface polarity of the particles caused gelling. This was still due to hydroxyl interaction with adhesive which increases the polarity.

**4-A-1) $CuSO_4.5H_2O$ formulated in BPO cure silicone adhesive:** Table 16 shows indicators based on $CuSO_4.5H_2O$ chromophore, BPO cure SilGrip™ PSA518 and 1 mil PI backing material. In order to reduce the particle sizes of crystalline $CuSO_4.5H_2O$, longer durations of sonication were used. In some examples the $CuSO_4.5H_2O$ was crushed to a powder in a mortar and pestle. Presence of MEK in general caused the coagulation of $CuSO_4.5H_2O$ particles after being added to the adhesive and hence resulted in some imperfect drawdown samples. All indicators were coated by using Method 1.

To reduce surface polarity of the chromophore particles, $CuSO_4.5H_2O$ was baked in the oven at 150°C for 60min. Baking of $CuSO_4.5H_2O$ provided a fine white powder (Scheme 2 below). It is believed that in this process, greater than 90% of water hydration was removed. The dehydrated copper sulfate, after it was sonicated and dispersed, provided a stable adhesive mix.

$$CuSO_4.5H_2O \xrightarrow{Heat} CuSO_4 + 5H_2O$$

Scheme 2 - Dehydration of $CuSO_4.5H_2O$

*Table 16 - Baked $CuSO_4.5H_2O$,* SilGrip™ *PSA518 and 1 mil PI/Kapton100*

| Mass Quantities (g) | | | | | | | Color change by ammonia exposure (Method 2) |
|---|---|---|---|---|---|---|---|
| **Baked $CuSO_4.5H_2O$** | **$TiO_2$** | **MEK** | **IPA** | **BPO** | **Toluene** | **PSA (55.5% solid)** | |
| 0.5 (20 parts) | 0.15 | - | 2 | 0.063 | 1.5 | 4.7 | Obvious color change from white to blue, purple |

**Formulation:**

$CuSO_4.5H_2O$ (0.5 g) was baked at 150°C for 60 min. The blue color changed to white. To the baked $CuSO_4.5H_2O$, IPA (2 g) was added and sonicated for 10 min. $TiO_2$ (0.15 g) was added to the $CuSO_4$ slurry and sonicated for 5 min. This slurry was added to SilGrip™ 518 adhesive (4.7 g) and BPO (0.063 g)/toluene (1 g) and mixed.

**4-B) Anhydrous copper (II) sulfate**

**4-B-1) Anhydrous $CuSO_4$ formulation with BPO cure methyl phenyl silicone adhesive**

*Table 17 - Anhydrous $CuSO_4$, BPO-cured methyl phenyl silicone, and 1 mil PI/Kapton100 (% against PSA solid part) for*

| $CuSO_4$ (g) , (parts) | Mass Quantities (g) | | | | | PSA Material | Average Adhesive Thickness (μm) |
|---|---|---|---|---|---|---|---|
| | $TiO_2$ | IPA | BPO (%) | Toluen e | PSA | | |
| **3.9 (25)** | 0.9 | 11 | 0.372 (2.4) | 4 | 28.11 | Mom. PSA518 | 30 |
| **3.9 (25)** | 0.9 | 11 | 0.372 (2.4) | 4 | 28.11 | Mom. PSA518 | 40 |
| **3.9 (25)** | 0.9 | 11 | 0.372 (2.4) | 4 | 28.11 | Mom. PSA518 | 30 |
| **3.9 (25)** | 0.9 | 11 | 0.372 (2.4) | 4 | 28.11 | Mom. PSA518 | 40 |
| **3.9 (25)** | 0.9 | 11 | 0.372 (2.4) | 4 | 28.11 | Mom. PSA518 | 50 |
| **3.12 (20)** | 0.9 | 11 | 0.372 (2.4) | 4 | 28.11 | Mom. PSA518 | 30 |
| **3.12 (20)** | 0.9 | 11 | 0.372 (2.4) | 4 | 28.11 | Mom. PSA518 | 40 |
| **3.12 (20)** | 0.9 | 11 | 0.372 (2.4) | 4 | 28.11 | Mom. PSA518 | 50 |
| **1.58 (10)** | 0.9 | 11 | 0.372 (2.4) | 4 | 28.11 | Mom. PSA518 | 30 |
| **1.58 (10)** | 0.9 | 11 | 0.372 (2.4) | 4 | 28.11 | Mom. PSA518 | 40 |
| **1.58 (10)** | 0.9 | 11 | 0.372 (2.4) | 4 | 28.11 | Mom. PSA518 | 50 |
| **0.78 (5)** | 0.9 | 11 | 0.372 (2.4) | 4 | 28.11 | Mom. PSA518 | 30 |
| **0.78 (5)** | 0.9 | 11 | 0.372 (2.4) | 4 | 28.11 | Mom. PSA518 | 40 |
| **0.78 (5)** | 0.9 | 11 | 0.372 (2.4) | 4 | 28.11 | Mom. PSA518 | 50 |

**Formulation Steps:**

Anhydrous $CuSO_4$ (for the amount, refer to Table 17) and TiOz (0.9 g) in IPA (11 g) was sonicated for 5 min. BPO (0.372 g) was dissolved in toluene (4g) and added to the adhesive (28.11g, referred to as "Mom. PSA518" in Table 17 and mixed. Then, $CuSO_4/TiO_2$ slurry was added to the adhesive and mixed.

**Loading amount and thickness vs. color retention time:** Table 18 and Table 19 show the initial color-change $\Delta L$ and the $\Delta L_{difference}$ for 25 parts $CuSO_4$, 20 parts $CuSO_4$, 10 parts $CuSO_4$, and 5 parts $CuSO_4$ when exposed to ammonia (Method 2) for different adhesive thicknesses where their color was fading over time.

*Table 18- BPO cure methyl phenyl silicone adhesive: $CuSO_4$ loading amount, adhesive thickness vs ΔL color-change time by time*

| CuSO4 dry parts per 100 adhesive solid part | Dry thickness of adhesive (micro m) | delta b measured surface | delta b from backing side lmil PET) | | | | | | |
|---|---|---|---|---|---|---|---|---|---|
| | | | Original (before exposing to ammonia) | Initial (After exposing ammonia) | 24hrs after | 48hrs after | 72hrs after | 96hrs after | 168hrs after |
| 5 | 50 | film side | 24.58 | 39.36 | 33.93 | 32.61 | 31.87 | 30.77 | 29.39 |
| 5 | 40 | film side | 24.51 | 39.32 | 33.25 | 32.52 | 31.6 | 30.52 | 28.59 |
| 5 | 30 | film side | 24.98 | 35.96 | 31.31 | 30.46 | 29.02 | 27.89 | 26.96 |
| 10 | 50 | film side | 24.86 | 47.42 | 43.98 | 40.87 | 40.56 | 40.09 | 37.94 |
| 10 | 40 | film side | 24.83 | 45.07 | 39.38 | 38.62 | 38.04 | 35.82 | 32.78 |
| 10 | 30 | film side | 25.85 | 42.75 | 36.62 | 35.21 | 34.05 | 32.51 | 29.81 |
| 20 | 50 | film side | 25.39 | 52.67 | 50.69 | 49.54 | 47.57 | 46.88 | 45.37 |
| 20 | 40 | film side | 25.03 | 50.82 | 45.17 | 42.38 | 41.61 | 40.21 | 37.42 |
| 20 | 30 | film side | 24.65 | 50.23 | 42.56 | 40.54 | 39.12 | 38.07 | 34.07 |
| 25 | 50 | film side | 24.32 | 53.24 | 51.63 | 50.51 | 49.22 | 48.14 | 46.33 |
| 25 | 40 | film side | 25.44 | 52.31 | 49.97 | 46.92 | 46.51 | 45.33 | 44.55 |
| 25 | 30 | film side | 25.39 | 50.91 | 43.29 | 41.76 | 40.45 | 38.97 | 35.09 |

*Table 19- BPO cure methyl phenyl silicone adhesive: $CuSO_4$ loading amount, adhesive thickness vs $\Delta L_{difference}$ change time by time*

| CuSO4 dry parts per 100 adhesive solid part | Dry thickness of adhesive (micro m) | delta b measured surface | delta b difference | | | | | | |
|---|---|---|---|---|---|---|---|---|---|
| | | | Original (before exposing to ammonia) | Initial (After exposing ammonia) | 24hrs after | 48hrs after | 72hrs after | 96hrs after | 168hrs after |
| 5 | 50 | film side | - | 14.78 | 9.35 | 8.03 | 7.29 | 6.19 | 4.81 |
| 5 | 40 | film side | - | 14.81 | 8.74 | 8.01 | 7.09 | 6.01 | 4.08 |
| 5 | 30 | film side | - | 10.98 | 6.33 | 5.48 | 4.04 | 2.91 | 1.98 |
| 10 | 50 | film side | - | 22.56 | 19.12 | 16.01 | 15.7 | 15.23 | 13.08 |
| 10 | 40 | film side | - | 20.24 | 14.55 | 13.79 | 13.21 | 10.99 | 7.95 |
| 10 | 30 | film side | - | 16.9 | 10.77 | 9.36 | 8.2 | 6.66 | 3.98 |
| 20 | 50 | film side | - | 27.28 | 25.3 | 24.15 | 22.18 | 21.49 | 19.98 |
| 20 | 40 | film side | - | 25.79 | 20.14 | 17.35 | 16.58 | 15.18 | 12.39 |
| 20 | 30 | film side | - | 25.58 | 17.91 | 15.89 | 14.47 | 13.42 | 9.42 |
| 25 | 50 | film side | - | 28.92 | 27.31 | 26.19 | 24.9 | 23.82 | 22.01 |
| 25 | 40 | film side | - | 26.87 | 24.53 | 21.48 | 21.07 | 19.89 | 19.11 |
| 25 | 30 | film side | - | 25.52 | 17.9 | 16.37 | 15.06 | 13.58 | 9.7 |

**Water Immersion:** The sample with 20 parts per 100 adhesive dry parts of anhydrous $CuSO_4$ in Table 17 was

coated on 1mil PET as dry adhesive thickness 50mm. The specimen was dried and cured in 130 °C for 3 min. This specimen was immersed in water for 12 days. Then, after it was taken out from water, it was dried and exposed to ammonia to see if still ammonia detection ability is there. $\Delta L_{difference}$ was calculated based on ΔL before and after ammonia exposure. Before water exposure the $\Delta L_{difference}$ for the specimen was 27.28 and after 12 days of water immersion, the specimen $\Delta L_{difference}$ was 23.59.

**4-B-2) Anhydrous $CuSO_4$ with platinum cure dimethyl silicone adhesive**

*Table 20- Pt cure dimethyl silicone adhesive formulation- Varied $CuSO_4$ loading amount*

| Material | Solid % | $CuSO_4$ dry parts per 100 adhesive solid part | | | | | |
|---|---|---|---|---|---|---|---|
| | | 3 | 5 | 10 | 15 | 20 | 25 |
| KR3700 | 60 | 10 | 10 | 10 | 10 | 10 | 10 |
| CAT-PT-50T | 2.5 | 0.03 | 0.03 | 0.03 | 0.03 | 0.03 | 0.03 |
| Toluene (Cat. Dilution) | 0 | 0.27 | 0.27 | 0.27 | 0.27 | 0.27 | 0.27 |
| Toluene (Cat. Dilution) | 0 | 1 | 1 | 1 | 1 | 1 | 1 |
| anhydrous $CuSO_4$ | 100 | 0.18 | 0.3 | 0.6 | 0.9 | 1.2 | 1.5 |
| IPA | 0 | 3 | 3 | 3 | 3 | 3 | 3 |
| IPA (Rinse) | 0 | 1 | 1 | 1 | 1 | 1 | 1 |
| $TiO_2$ | 100 | 0.3 | 0.3 | 0.3 | 0.3 | 0.3 | 0.3 |
| MEK | 0 | 2 | 2 | 2 | 2 | 2 | 2 |
| MEK (Rinse) | 0 | 1 | 1 | 1 | 1 | 1 | 1 |
| Extra Toluene | 0 | 0 | 0 | 0 | 2 | 2 | 2 |

**Formulation Steps:**

Anhydrous $CuSO_4$ (for the amount, refer to Table 20) was sonicated in IPA (3g) for 5 minutes. $TiO_2$ (0.3 g) in MEK (2g) was sonicated for 5 min. CAT-PT-50T (0.03 g) and toluene (1.27g) were added to the KR3700 adhesive (10g) and mixed. Then, $CuSO_4$ and $TiO_2$ slurry were added to the adhesive and mixed. The adhesive mix was coated on a 1mil PET film.

**Loading, Thickness vs. color-change retention:**

Table 21 and Table 22 show the initial color-change Δb and the $\Delta b_{difference}$ for 25 parts $CuSO_4$, 20 parts $CuSO_4$, 10 parts $CuSO_4$, 5 parts $CuSO_4$, and 3 parts $CuSO_4$ in Pt-cure dimethyl silicone adhesive when exposed to ammonia (Method 2) for different adhesive thicknesses where their color was fading over time.

*Table 21-Pt cure dimethyl silicone adhesive - $CuSO_4$ loading amount, adhesive thickness vs Δb time by time*

| CuSO4dry parts per 100 adhesive solid part | Dry thickness of adhesive ( micro m) | delta b measured surface | delta b from backing side (1mil PET) | | | | | | |
|---|---|---|---|---|---|---|---|---|---|
| | | | Original ( before exposing to ammonia) | Initial (After exposing ammonia) | 24hrs after | 48hrs after | 72hrs after | 96hrs after | 168hrs after |
| 3 | 40 | Film side | -1.02 | 11.36 | 5.55 | 3.27 | 2.29 | 1.05 | 0.38 |
| 3 | 30 | Film side | -0.69 | 9.6 | 3.81 | 2.1 | 1.49 | 0.85 | 0.14 |
| 3 | 20 | Film side | -0.75 | 4.99 | 1.9 | 0.79 | 0.29 | 0.36 | 0.06 |
| 5 | 40 | Film side | -1.22 | 14.35 | 7.83 | 4.74 | 3.85 | 3.22 | 0.39 |

(continued)

| CuSO4dry parts per 100 adhesive solid part | Dry thickness of adhesive ( micro m) | delta b measured surface | delta b from backing side (1mil PET) | | | | | | |
|---|---|---|---|---|---|---|---|---|---|
| | | | Original ( before exposing to ammonia) | Initial (After exposing ammonia) | 24hrs after | 48hrs after | 72hrs after | 96hrs after | 168hrs after |
| 5 | 30 | Film side | -0.57 | 14.73 | 7.94 | 4.34 | 3.23 | 2.6 | 0.48 |
| 5 | 20 | Film side | -0.53 | 10.57 | 4.49 | 2.33 | 3.59 | 3.15 | 0.09 |
| 10 | 40 | Film side | -1.13 | 28.69 | 21.65 | 17.93 | 16.3 | 13.59 | 6.19 |
| 10 | 30 | Film side | -0.93 | 20.33 | 12.64 | 8.49 | 6.58 | 4.81 | 1.67 |
| 10 | 20 | Film side | -0.66 | 15.03 | 7.87 | 4.33 | 3.02 | 2.13 | 0.89 |
| 20 | 40 | Film side | -0.53 | 35.69 | 28.58 | 24.48 | 22.77 | 20.74 | 11.7 |
| 20 | 30 | Film side | -0.28 | 34.87 | 27.63 | 24.09 | 22.1 | 20.35 | 10.34 |
| 20 | 20 | Film side | -0.12 | 26.86 | 17.97 | 12.77 | 10.24 | 9.47 | 3.22 |
| 25 | 40 | Film side | -0.96 | 39.33 | 35.46 | 31.23 | 30.05 | 28.69 | 21.24 |
| 25 | 30 | Film side | -0.06 | 38.98 | 31.41 | 27.09 | 25.06 | 22.79 | 12.86 |
| 25 | 20 | Film side | -0.33 | 27.89 | 17.56 | 11.13 | 8.08 | 5.82 | 2.69 |

*Table 22- Pt cure dimethyl silicone adhesive - $CuSO_4$ loading amount, adhesive thickness vs Δb difference change time by time*

| CuSO4 dry parts per 100 adhesive solid part | Dry thickness of adhesive Target ( micro m) | delta b measured surface | delta b difference | | | | | | |
|---|---|---|---|---|---|---|---|---|---|
| | | | Original ( before exposing to ammonia) | Initial (After exposing ammonia) | 24hrs after | 48hrs after | 72hrs after | 96hrs after | 168hrs after |
| 3 | 40 | Film side | 0 | 12.38 | 6.57 | 4.29 | 3.31 | 2.07 | 1.4 |
| 3 | 30 | Film side | 0 | 10.29 | 4.5 | 2.79 | 2.18 | 1.54 | 0.83 |
| 3 | 20 | Film side | 0 | 5.74 | 2.65 | 1.54 | 1.04 | 1.11 | 0.81 |
| 5 | 40 | Film side | 0 | 15.57 | 9.05 | 5.96 | 5.07 | 4.44 | 1.61 |
| 5 | 30 | Film side | 0 | 15.3 | 8.51 | 4.91 | 3.8 | 3.17 | 1.05 |
| 5 | 20 | Film side | 0 | 11.1 | 5.02 | 2.86 | 4.12 | 3.68 | 0.62 |
| 10 | 40 | Film side | 0 | 29.82 | 22.78 | 19.06 | 17.43 | 14.72 | 7.32 |
| 10 | 30 | Film side | 0 | 21.26 | 13.57 | 9.42 | 7.51 | 5.74 | 2.6 |
| 10 | 20 | Film side | 0 | 15.69 | 8.53 | 4.99 | 3.68 | 2.79 | 1.55 |
| 20 | 40 | Film side | 0 | 36.22 | 29.11 | 25.01 | 23.3 | 21.27 | 12.23 |
| 20 | 30 | Film side | 0 | 35.15 | 27.91 | 24.37 | 22.38 | 20.63 | 10.62 |
| 20 | 20 | Film side | 0 | 26.98 | 18.09 | 12.89 | 10.36 | 9.59 | 3.34 |
| 25 | 40 | Film side | 0 | 40.29 | 36.42 | 32.19 | 31.01 | 29.65 | 22.2 |
| 25 | 30 | Film side | 0 | 39.04 | 31.47 | 27.15 | 25.12 | 22.85 | 12.92 |
| 25 | 20 | Film side | 0 | 28.22 | 17.89 | 11.46 | 8.41 | 6.15 | 3.02 |

**4-B-3) Anhydrous $CuSO_4$ with acrylic adhesive**

**Loading, Thickness vs. color-change retention:**

*Table 23-Acrylic adhesive formulations - Varied $CuSO_4$ loading amount*

| Material | Solid % | CuSO4 dry parts per 100 adhesive solid part | | | | |
|---|---|---|---|---|---|---|
| | | 3 | 5 | 10 | 20 | 25 |
| EXK18-052 | 50 | 10.4 | 10.4 | 10.4 | 10.4 | 10.4 |
| BXX4805TX | 5 | 0.874 | 0.874 | 0.874 | 0.874 | 0.874 |
| Toluene (Cross linker Dilution) | 0 | 2 | 2 | 2 | 2 | 2 |
| CuSO4 | 100 | 0.156 | 0.26 | 0.52 | 1.04 | 1.3 |
| IPA | 0 | 2 | 2 | 2 | 2 | 2 |
| IPA (Rinse) | 0 | 1 | 1 | 1 | 1 | 1 |
| TiO2 | 100 | 0.26 | 0.26 | 0.26 | 0.26 | 0.26 |
| MEK | 0 | 2 | 2 | 2 | 2 | 2 |
| MEK (Rinse) | 0 | 1 | 1 | 1 | 1 | 1 |

**Formulation Steps:**

Anhydrous $CuSO_4$ (for the amount, refer to Table 23) was sonicated in IPA (2g) for 5 minutes. TiOz (0.26g) in MEK (2g) was sonicated for 5 minutes. BXX4805TX (0.874 g) diluted with toluene (2g) was added to the EXK18-052 adhesive (10.4g) and mixed. Then, $CuSO_4$ and $TiO_2$ slurry were added to the adhesive and mixed. The adhesive mix was coated on a 1mil PET film.

**Loading, Thickness** vs. **color-change retention:**

Table 24 and Table 25 show the initial color-change $\Delta b$ and the $\Delta b_{difference}$ for 25 parts $CuSO_4$, 20 parts $CuSO_4$, 10 parts $CuSO_4$, 5 parts $CuSO_4$, and 3 parts $CuSO_4$ in acrylic adhesive when exposed to ammonia (Method 2) for different adhesive thicknesses where their color was fading over time.

*Table 24-Acrylic adhesive, $CuSO_4$ loading amount, adhesive thickness vs $\Delta b$ color-change time by time*

| CuSO4 dry parts per 100 adhesive solid part | Dry thickness of adhesive Target ( micro m) | delta b measured surface | delta b from backing side (1mil PET) | | | | | | |
|---|---|---|---|---|---|---|---|---|---|
| | | | Original ( before exposing to ammonia) | Initial (After exposing ammonia) | 24hrs after | 48hrs after | 72hrs after | 96hrs after | 168hrs after |
| 3 | 40 | Film side | -0.36 | 10.19 | 10.15 | 9.81 | 9.11 | 7.09 | 4.82 |
| 3 | 30 | Film side | -0.62 | 7.85 | 7.3 | 6.8 | 6.01 | 4.87 | 3.31 |
| 3 | 20 | Film side | -0.08 | 6.4 | 6.01 | 5.17 | 4.93 | 3.51 | 2.07 |
| 5 | 40 | Film side | -0.26 | 16.85 | 16.23 | 14.09 | 13.22 | 11.73 | 9.48 |
| 5 | 30 | Film side | -0.35 | 15.05 | 14.78 | 12.18 | 11.36 | 9.79 | 7.87 |
| 5 | 20 | Film side | -0.84 | 8.06 | 8 | 6.86 | 5.47 | 4.65 | 2.76 |
| 10 | 40 | Film side | -0.42 | 26.41 | 24.24 | 23.14 | 22.1 | 20.5 | 18.39 |
| 10 | 30 | Film side | -0.29 | 23.28 | 22.83 | 20.5 | 18.69 | 17.16 | 14.93 |

(continued)

| CuSO4 dry parts per 100 adhesive solid part | Dry thickness of adhesive Target ( micro m) | delta b measured surface | delta b from backing side (1mil PET) | | | | | | |
|---|---|---|---|---|---|---|---|---|---|
| | | | Original ( before exposing to ammonia) | Initial (After exposing ammonia) | 24hrs after | 48hrs after | 72hrs after | 96hrs after | 168h rs after |
| 10 | 20 | Film side | -0.19 | 14.44 | 14.38 | 12.45 | 10.98 | 9.24 | 6.94 |
| 20 | 40 | Film side | -0.04 | 33.69 | 31.09 | 29.16 | 28.04 | 27.08 | 25.8 |
| 20 | 30 | Film side | -0.4 | 27.72 | 25.52 | 23.71 | 21.18 | 20.22 | 18.73 |
| 20 | 20 | Film side | -0.06 | 20.44 | 18.71 | 16.86 | 15.03 | 13.6 | 10.75 |
| 25 | 40 | Film side | -0.25 | 35 | 34.44 | 32.24 | 30.33 | 29.66 | 26.08 |
| 25 | 30 | Film side | -0.2 | 34.24 | 33.6 | 31.67 | 29.58 | 28.1 | 26.17 |
| 25 | 20 | Film side | -0.37 | 26.74 | 24.65 | 23.09 | 22.38 | 21.44 | 23.43 |

*Table 25-Acrylic adhesive, $CuSO_4$ loading amount, adhesive thickness vs $\Delta b_{difference}$ change time by time*

| CuSO4 dry parts per 100 adhesive solid part | Dry thickness of adhesive (micro m) | delta b measured surface | delta b difference | | | | | | |
|---|---|---|---|---|---|---|---|---|---|
| | | | Original (before exposing to ammonia) | Initial (After exposing ammonia) | 24hrs after | 48hrs after | 72hrs after | 96hrs after | 168hrs after |
| 3 | 40 | Film side | - | 10.55 | 10.51 | 10.17 | 9.47 | 7.45 | 5.18 |
| 3 | 30 | Film side | - | 8.47 | 7.92 | 7.42 | 6.63 | 5.49 | 3.93 |
| 3 | 20 | Film side | - | 6.48 | 6.09 | 5.25 | 5.01 | 3.59 | 2.15 |
| 5 | 40 | Film side | - | 17.11 | 16.49 | 14.35 | 13.48 | 11.99 | 9.74 |
| 5 | 30 | Film side | - | 15.4 | 15.13 | 12.53 | 11.71 | 10.14 | 8.22 |
| 5 | 20 | Film side | - | 8.9 | 8.84 | 7.7 | 6.31 | 5.49 | 3.6 |
| 10 | 40 | Film side | - | 26.83 | 24.66 | 23.56 | 22.52 | 20.92 | 18.81 |
| 10 | 30 | Film side | - | 23.57 | 23.12 | 20.79 | 18.98 | 17.45 | 15.22 |
| 10 | 20 | Film side | - | 14.63 | 14.57 | 12.64 | 11.17 | 9.43 | 7.13 |
| 20 | 40 | Film side | - | 33.73 | 31.13 | 29.2 | 28.08 | 27.12 | 25.84 |
| 20 | 30 | Film side | - | 28.12 | 25.92 | 24.11 | 21.58 | 20.62 | 19.13 |
| 20 | 20 | Film side | - | 20.5 | 18.77 | 16.92 | 15.09 | 13.66 | 10.81 |
| 25 | 40 | Film side | - | 35.25 | 34.69 | 32.49 | 30.58 | 29.91 | 26.33 |
| 25 | 30 | Film side | - | 34.44 | 33.8 | 31.87 | 29.78 | 28.3 | 26.37 |
| 25 | 20 | Film side | - | 27.11 | 25.02 | 23.46 | 22.75 | 21.81 | 23.8 |

**4-B-4) Adhesion of anhydrous $CuSO_4$ specimens**

**Pt-Cure dimethyl silicone adhesive:**

*Table 26-Pt cure dimethyl silicone adhesive formulation to test adhesion*

| Material | Solid % | $CuSO_4$ dry parts per 100 adhesive solid parts | | | | | |
|---|---|---|---|---|---|---|---|
| | | 3 | 5 | 10 | 20 | 25 | 50 |
| KR3700 (Silicone adhesive) | 60 | 10 | 10 | 10 | 10 | 10 | 10 |
| CAT-PT-50T | 2.5 | 0.03 | 0.03 | 0.03 | 0.03 | 0.03 | 0.03 |
| Toluene (Cat. Dilution) | 0 | 0.27 | 0.27 | 0.27 | 0.27 | 0.27 | 0.27 |
| Toluene (Cat. Dilution) | 0 | 1 | 1 | 1 | 1 | 1 | 1 |
| $CuSO_4$ | 100 | 0.18 | 0.3 | 0.6 | 1.2 | 1.5 | 3 |
| IPA | 0 | 3 | 3 | 3 | 3 | 3 | 3 |
| IPA (Rinse) | 0 | 1 | 1 | 1 | 1 | 1 | 1 |
| $TiO_2$ | 100 | 0.3 | 0.3 | 0.3 | 0.3 | 0.3 | 0.3 |
| MEK | 0 | 2 | 2 | 2 | 2 | 2 | 2 |
| MEK (Rinse) | 0 | 1 | 1 | 1 | 1 | 1 | 1 |
| Extra Toluene | 0 | 0 | 0 | 0 | 2 | 2 | 2 |

Anhydrous $CuSO_4$ (for the amount, refer to Table 26) was sonicated in IPA (3g) for 5 minutes. $TiO_2$ (0.3 g) in MEK (2g) was sonicated for 5 min. CAT-PT-50T (0.03 g) and toluene (1.27g) were added to the KR3700 adhesive (10g) and mixed. Then, $CuSO_4$ and $TiO_2$ slurry were added to the adhesive and mixed. The adhesive mix was coated on a 1mil PET film.

Table 27 shows the adhesion test results for specimens made from anhydrous $CuSO_4$ in Pt-cure dimethyl silicone adhesive when the thickness was varied.

*Table 27- Adhesion to steel (SUS 304) of Silicone adhesive 30 min. dwell time, pulling speed 300mm/min.*

| adhesive | CuSO4 dry parts per 100 adhesive solid part | Dry thickness of adhesive (micro m) | Average adhesion (N/ 25.4mm) |
|---|---|---|---|
| KR3700 (Silicone adhesive) | 3 | 40 | 7.7 |
| KR3700 (Silicone adhesive) | 3 | 20 | 6.5 |
| KR3700 (Silicone adhesive) | 5 | 40 | 8.0 |
| KR3700 (Silicone adhesive) | 5 | 20 | 5.8 |
| KR3700 (Silicone adhesive) | 10 | 40 | 6.8 |
| KR3700 (Silicone adhesive) | 10 | 20 | 5.4 |
| KR3700 (Silicone adhesive) | 20 | 40 | 7.2 |
| KR3700 (Silicone adhesive) | 20 | 20 | 4.5 |
| KR3700 (Silicone adhesive) | 25 | 40 | 5.9 |
| KR3700 (Silicone adhesive) | 25 | 20 | 2.5 |

(continued)

| adhesive | CuSO4 dry parts per 100 adhesive solid part | Dry thickness of adhesive (micro m) | Average adhesion (N/ 25.4mm) |
|---|---|---|---|
| KR3700 (Silicone adhesive) | 50 | 40 | 0.0 |
| KR3700 (Silicone adhesive) | 50 | 100 | 0.0 |

**Acrylic adhesive:**

*Table 28- Acrylic adhesive formulations to test adhesion*

| | | $CuSO_4$ dry parts per 100 adhesive solid parts | | |
|---|---|---|---|---|
| | Solid % | 0 | 15 | 50 |
| Material EXK18-05(Acrylic adhesive) | 50 | 10.4 | 10.4 | 10.4 |
| BXX4805TX | 5 | 0.874 | 0.874 | 0.874 |
| Toluene (Crosslinker Dilution) | 0 | 2 | 2 | 2 |
| $CuSO_4$ | 100 | 0 | 0.78 | 2.6 |
| IPA | 0 | 2 | 2 | 4 |
| IPA (Rinse) | 0 | 1 | 1 | 2 |
| $TiO_2$ | 100 | 0.26 | 0.26 | 0.26 |
| MEK | 0 | 2 | 2 | 2 |
| MEK (Rinse) | 0 | 1 | 1 | 1 |
| Extra Toluene | 0 | 0 | 0 | 0 |

Anhydrous $CuSO_4$ (for the amount, refer to Table 28) was sonicated in IPA (2g) for 5 minutes. TiOz (0.26g) in MEK (2g) was sonicated for 5 minutes. BXX4805TX (0.874 g) diluted with toluene (2g) was added to the EXK18-052 adhesive (10.4g) and mixed. Then, $CuSO_4$ and $TiO_2$ slurry were added to the adhesive and mixed. The adhesive mix was coated on a 1mil PET film.

Table 29 shows the adhesion test results for specimens made from anhydrous $CuSO_4$ in acrylic adhesive when the thickness was varied.

*Table 29- Adhesion to steel (SUS 304) of acrylic adhesive 30 min. dwell time, Pulling speed 300mm/min*

| Adhesive | $CuSO_4$ dry parts per 100 adhesive solid part | Dry thickness of adhesive (□m) | Average adhesion (N/ 25.4mm) |
|---|---|---|---|
| EXK18-05 (Acrylic adhesive) | 15 | 60 | 9.3 |
| EXK18-05 (Acrylic adhesive) | 50 | 100 | 0.0 |
| EXK18-05 (Acrylic adhesive) | 0 | 20 | 7.4 |
| EXK18-05 (Acrylic adhesive) | 0 | 100 | 10.0 |

**4-B-5) Exposure to Anhydrous Ammonia (7.5% in Air):** Anhydrous $CuSO_4$ 15 parts per 100 adhesive dry part in Table 20 (40mm and 50mm adhesive thickness) with 1 mil polyimide were exposed to anhydrous ammonia (7.5%

in air) for 30 minutes at 15 mL/min flow rate and room temperature (Method 4). The $\Delta L_{differences}$ for 40mm thick sample and 50mm sample were measured as 19.36 and 21.2, respectively. These results show that both anhydrous ammonia and ammonium hydroxide can provide good color-change and hence be able to be detected.

**4-B-6) Anhydrous $CuSO_4$ with moisture cure silicone rubber**

**S-48:** Anhydrous $CuSO_4$ (1.5 g) and octane (1.0 g) was added to Dow Corning 734 RTV Sealant (10 g) and mixed. This mix was coated on a 2 mil polyethylene film to provide a silicone rubber layer 45 mm thick. When exposed to ammonia (Method 2), a $\Delta L_{difference}$ of 27.3 was measured between the before and after color-change. The color-change was from pale blue to dark purple for the adhesive layer. This silicone rubber S does not have tackiness after it is cured by moisture.

**4-B-7) UV-Resistance of anhydrous $CuSO_4$ in Pt-cure dimethyl silicone adhesive**

Anhydrous $CuSO_4$ 20 parts per 100 adhesive dry part in table 20 (40mm adhesive thickness) with 1 mil polyimide and 1 mil PET backing were exposed to UV in a sunshine weather-ometer (Super xenon weather meter SX-75, 7.5KW xenon arc lamp, Suga test instrument Co.) for 200hrs & 400hrs, 600hrs (Table 30). UV was irradiated from the Polyimide or PET backing film side. Then, the samples were exposed to ammonia gas (Method 2). These samples did not show significant degradation of ammonia detection ability from being subjected to this accelerated UV test. Case of PET backing, film was slightly fragile.

*Table 30 - $\Delta L_{difference}$ color-change for specimens with anhydrous $CuSO_4$ with PI and PET backing after exposure to UV*

| Sample | (PI) | (PET) |
|---|---|---|
| 0 hrs | 19.43 | 27.74 |
| 200 hrs | 27.6 | 22.55 |
| 400 hrs | 21.9 | 17.03 |
| 600 hrs | 18.93 | 18.12 |

**4-B-8) Exposure to Liquid Ammonia**

Anhydrous $CuSO_4$ 15 parts per 100 adhesive dry part in Table 20 (50mm adhesive thickness) with 1 mil PET was soaked in 30% aqueous ammonia for 5min. The color-change was from white to dark purple for the adhesive layer. The initial $\Delta b_{difference}$ after color-change was measure as 38.75. The color-fading after 24hrs, 48hrs, and 72hrs were measured as $\Delta b_{differences}$ of 32.56, 28.26, and 21.43 respectively. These results show that aqueous ammonia can provide good color-change and hence be able to be detected.

**Example 5**

**Comparison with other metal salts that can be reacted with ammonia.**

$NiCl_2$ & $NiSO_4$ are known to react with ammonia. The samples in Table 31 were formulated in order to confirm its chemochromic property.

*Table 31 - Formulations based on nickel chloride, sulfate and nitrate; their color-change with $NH_3$ and $H_2S$ gas*

| Formulation | $NiCl_2$ | $NiSO_4$ | $NiNO_3$ |
|---|---|---|---|
| Curing temperature (°C) | 177 | - | 177 |
| Curing time (min) | 3 | - | 3 |
| Backing film | 1 mil polyimide | - | 1 mil polyimide |
| Adhesive thickness as dry (microM) | 60 | - | 60 |
| SilGrip™ 518 (55.5%) (g) | 4.688 | 4.688 | 4.688 |
| BPO (g) | 0.063 | 0.063 | 0.063 |
| Toluene (g) | 0 | 0 | 0 |

(continued)

| Formulation | $NiCl_2$ | $NiSO_4$ | $NiNO_3$ |
|---|---|---|---|
| $TiO_2$ (g) | 0.15 | 0.15 | 0.15 |
| MEK (disperse) (g) | 1 | 1 | 1 |
| MEK (rinse) (g) | 1 | 1 | 1 |
| IPA (g) | 2.47 | 2.47 | 2.47 |
| $NiCl_2$ (g) | 0.13 | - | - |
| $NiSO_4$ (g) | - | 0.13 | - |
| $NiNO_3$ (g) | - | - | 0.13 |
| Color change by ammonia | No | - | No |

NiClz was dispersed in IPA as 5% solution, which was then heated up to 70° C; however, the NiClz wasn't soluble in IPA. Then, at room temp., the solution was sonicated for 5 min. As result, the $NiCl_2$ broke down into a fine power. The powder was formulated in an adhesive and coated so as to achieve an adhesive with a thickness of 60 mm. $NiSO_4$ could not be dissolved in IPA, and even when sonicated, it was not able to be a fine powder. $NiNO_3$ was able to be dissolved in IPA as 5% solution. The NiClz sample and $NiNO_3$ sample were exposed to 38 to 40% ammonia for 10 min. (Method 2), but the color did not change.

### 5. Methods Used in the Examples

**Method 1 - Making a draw down sample**

A coating machine with a glass plate is prepared. A 12" width x 14" length film backing is placed on the clean glass plate wherein the plate is larger than the film backing. One end of the film backing is fixed on the glass temporarily with double coated adhesive tape. A draw down bar (effective width 9", Tester Sangyo Co. LTD, Tokyo Japan) is placed on the film backing. An appropriate amount of adhesive solution is placed in front of the draw down bar, and then the dial of the coating machine is adjusted to control the gap between the film and the bar in order to get a target thickness. The bar is drawn down so as to coat the adhesive onto the film. The coated film is placed on the support plate. The film may be fixed onto the plate with clips. The coated film is air dried at room temperature for about 3 to 5 minutes, and then dried and cured at high temperature for 3 minutes.

**Method 2 - Exposing adhesive tape or existing products to ammonia gas from aqueous solution**

Ammonium hydroxide solution (28 to 30%, Sigma Aldrich) is poured into a 500 ml Erlenmeyer flask that has about a 30 mm diameter opening at top. An adhesive tape specimen was placed over the opening so as to close the opening completely with adhesive tape. Thus, the adhesive surface is exposed to ammonia gas rising from ammonia water. The adhesive tape was left on for 10 minutes and then removed. The specimen was checked for color change by naked eye observation and/or the ΔL value was measured from the backing film side using a color meter, both before and after the tape was exposed to ammonia.

After the color of the specimen was changed by exposing to ammonia gas, the specimen was moved away from the ammonia gas to see if the color change reverted back to its original color. How long it took to revert back was measured.

In the case where the specimen was made using a clear film, a 1 mil (0.0254 mm) polyimide film was placed on its backing in order to make the color change strong via black and white contrast.

**Method 3 - ΔL difference**

A colorimeter device (Color-Tec PCM+, ColorTec, NJ, USA) was used to measure ΔL, which indicates the lightness value in CIELAB color space with L=0 representing the darkest black and L=100 representing the brightest white. The ΔL of the specimen was measured against the standard white panel (i.e., the blank) that was equipped with this device. This is the ΔL initial value. After the specimen was exposed to ammonia gas, the ΔL of the specimen was measured against the standard white panel. This is the ΔL after value. The $\Delta L_{difference}$ is calculated by subtracting ΔL initial from ΔL after to obtain the $\Delta L_{difference}$. The higher value of ΔL difference corresponds to a more intense color-change.

When the specimen was measured, the adhesive side was covered with a clear fluoro silicone PET release liner. Then, the specimen was placed on white copier paper. The ΔL value was measured from the backing film side.
In the case of polyimide backing sample, the sample was measured as is. In the case of PET backing sample, the backing PET film was covered with 1 mil polyimide film in order to enhance the color change difference in a black and white axis. If the $\Delta L_{difference}$ is larger than 5, it is easy to recognize the difference in color by the naked eye.

**Method 3.2** - **Δb difference**

A colorimeter device (Color-Tec PCM+, Color-Tec, NJ, USA) was used to measure Δb, which indicates the lightness value in CIELAB color space with b<0 representing the yellowness and b>0 representing the blueness. The Δb of the specimen was measured against the standard white panel (i.e., the blank) that was equipped with this device. This is the Δb initial value. After the specimen was exposed to ammonia gas, the Δb of the specimen was measured against the standard white panel. This is the Δb after value. The Δb **difference** is calculated by subtracting Δb initial from Δb after to obtain the $\Delta b_{difference}$. The higher value of Δb **difference** corresponds to a more intense color-change.
When the specimen was measured, the adhesive side was covered with a clear fluoro silicone PET release liner. Then, the specimen was placed on white copier paper. The Δb value was measured from the backing film side. If the $\Delta b_{difference}$ is larger than 5, it is easy to recognize the difference in color by the naked eye.

**Method 4** - **Exposing adhesive tape or existing products to anhydrous 7.5% ammonia gas**

The specimen was applied on a PTFE frame that has opening of 25 mm × 25 mm. This specimen with PTFE frame was placed in a 30 ml glass vial. This vial had a gas intake port and gas exhaust port. 7.5% ammonia gas at 15 ml/min at R.T. was flown into the vial for 30 minutes and then the ΔL or Δb of the specimen before and after it was exposed to ammonia was measured as same way as test Method 3 and Method 3.2.

## Claims

**1.** A chemochromic indicator for detecting an ammonia compound comprising:

a. A first adhesive layer; and
b. a chemochromic copper compound, the copper compound disposed in the adhesive layer, wherein exposure to an ammonia compound changes the color of the adhesive layer, and wherein the copper compound comprises copper sulfate, copper chloride, copper nitrate, copper acetate and/or mixtures thereof.

**2.** A chemochromic indicator according to claim 1, wherein the ammonia compound is ammonia gas, hydrous ammonia liquid or combinations thereof.

**3.** A chemochromic indicator according to any one of claims 1 and 2, wherein the adhesive layer is a pressure sensitive adhesive layer or a self-fusing adhesive layer.

**4.** A chemochromic indicator according to claim 3, wherein the adhesive layer is comprised of a silicone polymer, an acrylic polymer, a urethane polymer, a natural rubber, a synthetic rubber, or combinations thereof.

**5.** A chemochromic indicator according to any one of claims 1 to 4, wherein the copper compound is $CuSO_4$, $CuNO_3$, $CuCl_2$, or $Cu(CH_3COO)_2$.

**6.** A chemochromic indicator according to any one of claims 1 to 5, wherein the copper compound is $CuSO_4$ and $CuCl_2$.

**7.** A chemochromic indicator according to any one of claims 5 and 6, wherein the copper compound is anhydrous or hydrate, or combinations thereof.

**8.** The chemochromic indicator according to any one of claims 1 to 7 further comprising a contrasting color compound.

**9.** The chemochromic indicator of claim 8, wherein the contrasting color compound comprises titanium dioxide ($TiO_2$).

**10.** A chemochromic indicator according to any one of claims 1 to 9, wherein the copper compound comprises $CuSO_4$, and the amount of $CuSO_4$ is equal to or higher than 5 parts per 100 of adhesive.

**11.** A chemochromic indicator according to any one of claims 1 to 10, wherein the thickness of adhesive layer is equal to or higher than 30 micro m thickness.

**12.** A chemochromic indicator according to any one of claims 1 to 11, further comprising a backing layer.

**13.** A chemochromic indicator according to any one of claims 1 to 12, further comprising a release liner.

**14.** A chemochromic indicator according to any one of claims 1 to 13, further comprising a second adhesive layer on top of the first adhesive layer.

**15.** A chemochromic indicator according to any one of claims 1 to 14, wherein the chemochromic indicator has an adhesion higher than 0.5 N/25.4mm.

**Patentansprüche**

**1.** Chemochromer Indikator zum Nachweisen einer Ammoniakverbindung, umfassend:

a. eine erste Klebstoffschicht und
b. eine chemochrome Kupferverbindung, wobei die Kupferverbindung in der Klebstoffschicht angeordnet ist, wobei eine Exposition gegenüber einer Ammoniakverbindung die Farbe der Klebstoffschicht verändert und wobei die Kupferverbindung Kupfersulfat, Kupferchlorid, Kupfernitrat, Kupferacetat und/oder Mischungen davon umfasst.

**2.** Chemochromer Indikator gemäß Anspruch 1, wobei die Ammoniakverbindung Ammoniakgas, wasserhaltige Ammoniakflüssigkeit oder Kombinationen davon ist.

**3.** Chemochromer Indikator gemäß einem der Ansprüche 1 und 2, wobei die Klebstoffschicht eine Haftklebstoffschicht oder eine selbstverschweißende Klebstoffschicht ist.

**4.** Chemochromer Indikator gemäß Anspruch 3, wobei die Klebstoffschicht ein Silikonpolymer, ein Acrylpolymer, ein Urethanpolymer, einen Naturkautschuk, einen Synthesekautschuk oder Kombinationen davon umfasst.

**5.** Chemochromer Indikator gemäß einem der Ansprüche 1 bis 4, wobei die Kupferverbindung $CuSO_4$, $CuNO_3$, $CuCl_2$ oder $Cu(CH_3COO)_2$ ist.

**6.** Chemochromer Indikator gemäß einem der Ansprüche 1 bis 5, wobei die Kupferverbindung $CuSO_4$ und $CuCl_2$ ist.

**7.** Chemochromer Indikator gemäß einem der Ansprüche 5 und 6, wobei die Kupferverbindung wasserfrei oder ein Hydrat oder Kombinationen davon ist.

**8.** Chemochromer Indikator gemäß einem der Ansprüche 1 bis 7, ferner umfassend eine Kontrastfarbenverbindung.

**9.** Chemochromer Indikator nach Anspruch 8, wobei die Kontrastfarbenverbindung Titandioxid ($TiO_2$) umfasst.

**10.** Chemochromer Indikator gemäß einem der Ansprüche 1 bis 9, wobei die Kupferverbindung $CuSO_4$ umfasst und die Menge an $CuSO_4$ gleich oder höher als 5 Teile pro 100 Teile des Klebstoffs ist.

**11.** Chemochromer Indikator gemäß einem der Ansprüche 1 bis 10, wobei die Dicke der Klebstoffschicht gleich oder größer als eine Dicke von 30 Mikrometern ist.

**12.** Chemochromer Indikator gemäß einem der Ansprüche 1 bis 11, ferner umfassend eine Trägerschicht.

**13.** Chemochromer Indikator gemäß einem der Ansprüche 1 bis 12, ferner umfassend eine Trennschicht.

**14.** Chemochromer Indikator gemäß einem der Ansprüche 1 bis 13, ferner umfassend eine zweite Klebstoffschicht auf der ersten Klebstoffschicht.

15. Chemochromer Indikator gemäß einem der Ansprüche 1 bis 14, wobei der chemochrome Indikator eine Haftkraft von höher als 0,5 N/25,4 mm aufweist.

## Revendications

1. Indicateur chimiochromique destiné à détecter un composé d'ammoniac, comprenant :

   a. une première couche adhésive ; et
   b. un composé de cuivre chimiochromique, le composé de cuivre étant disposé dans la couche adhésive, dans lequel l'exposition à un composé d'ammoniac change la couleur de la couche adhésive, et dans lequel le composé de cuivre comprend du sulfate de cuivre, du chlorure de cuivre, du nitrate de cuivre, de l'acétate de cuivre et/ou des mélanges de ceux-ci.

2. Indicateur chimiochromique selon la revendication 1, dans lequel le composé d'ammoniac est un ammoniac gazeux, un ammoniac liquide hydraté ou des combinaisons de ceux-ci.

3. Indicateur chimiochromique selon l'une quelconque des revendications 1 et 2, dans lequel la couche adhésive est une couche adhésive sensible à la pression ou une couche adhésive à fusion automatique.

4. Indicateur chimiochromique selon la revendication 3, dans lequel la couche adhésive est composée d'un polymère de silicone, d'un polymère acrylique, d'un polymère d'uréthane, d'un polymère naturel, d'un caoutchouc synthétique ou de combinaisons de ceux-ci.

5. Indicateur chimiochromique selon l'une quelconque des revendications 1 à 4, dans lequel le composé de cuivre est $CuSO_4$, $CuNO_3$, $CuCl_2$, ou $Cu(CH_3COO)_2$.

6. Indicateur chimiochromique selon l'une quelconque des revendications 1 à 5, dans lequel le composé de cuivre est $CuSO_4$ et $CuCl_2$.

7. Indicateur chimiochromique selon l'une quelconque des revendications 5 et 6, dans lequel le composé de cuivre est anhydre ou hydrate, ou des combinaisons de ceux-ci.

8. Indicateur chimiochromique selon l'une quelconque des revendications 1 à 7 comprenant en outre un composé de couleur contrastante.

9. Indicateur chimiochromique selon la revendication 8, dans lequel le composé de couleur contrastante comprend du dioxyde de titane ($TiO_2$).

10. Indicateur chimiochromique selon l'une quelconque des revendications 1 à 9, dans lequel le composé de cuivre comprend du $CuSO_4$, et la quantité de $CuSO_4$ est égale ou supérieure à 5 parties pour 100 d'adhésif.

11. Indicateur chimiochromique selon l'une quelconque des revendications 1 à 10, dans lequel l'épaisseur de la couche adhésive est égale ou supérieure à 30 micro m d'épaisseur.

12. Indicateur chimiochromique selon l'une quelconque des revendications 1 à 11, comprenant en outre une couche de dessous.

13. Indicateur chimiochromique selon l'une quelconque des revendications 1 à 12, comprenant en outre une couche de revêtement.

14. Indicateur chimiochromique selon l'une quelconque des revendications 1 à 13, comprenant en outre une seconde couche adhésive au-dessus de la première couche adhésive.

15. Indicateur chimiochromique selon l'une quelconque des revendications 1 à 14, dans lequel l'indicateur chimiochromique présente une adhérence supérieure à 0,5 N/25,4 mm.

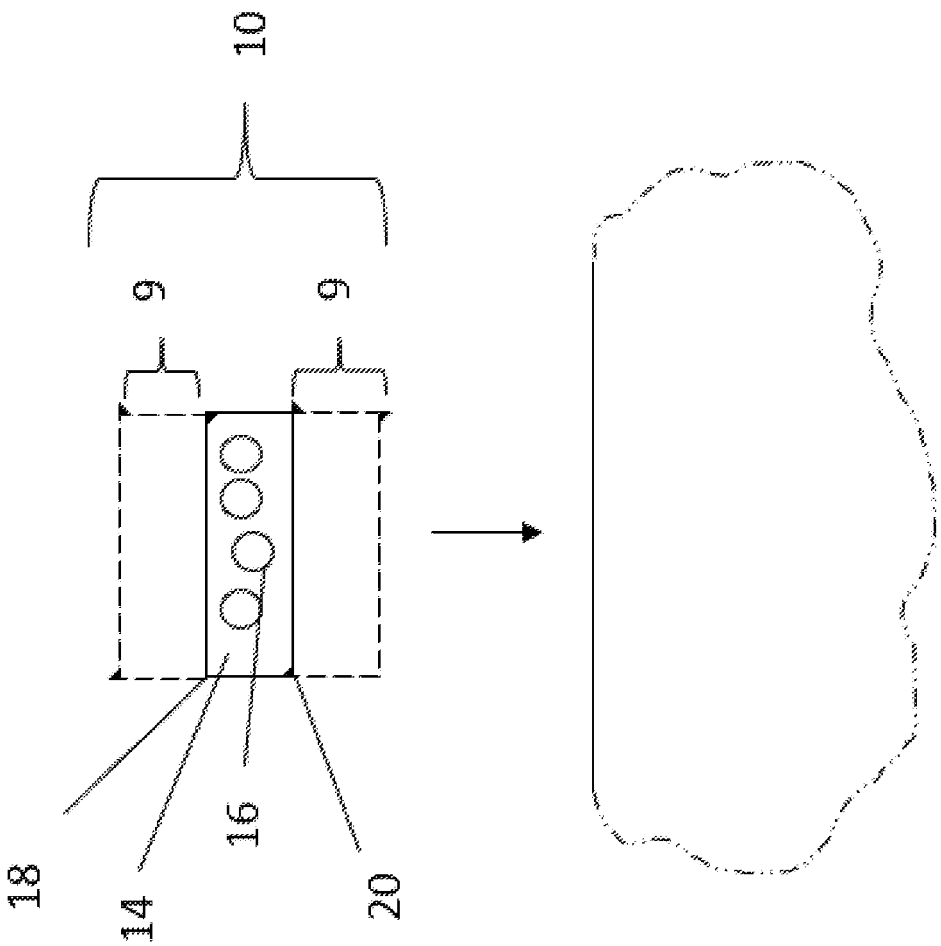


FIG. 1

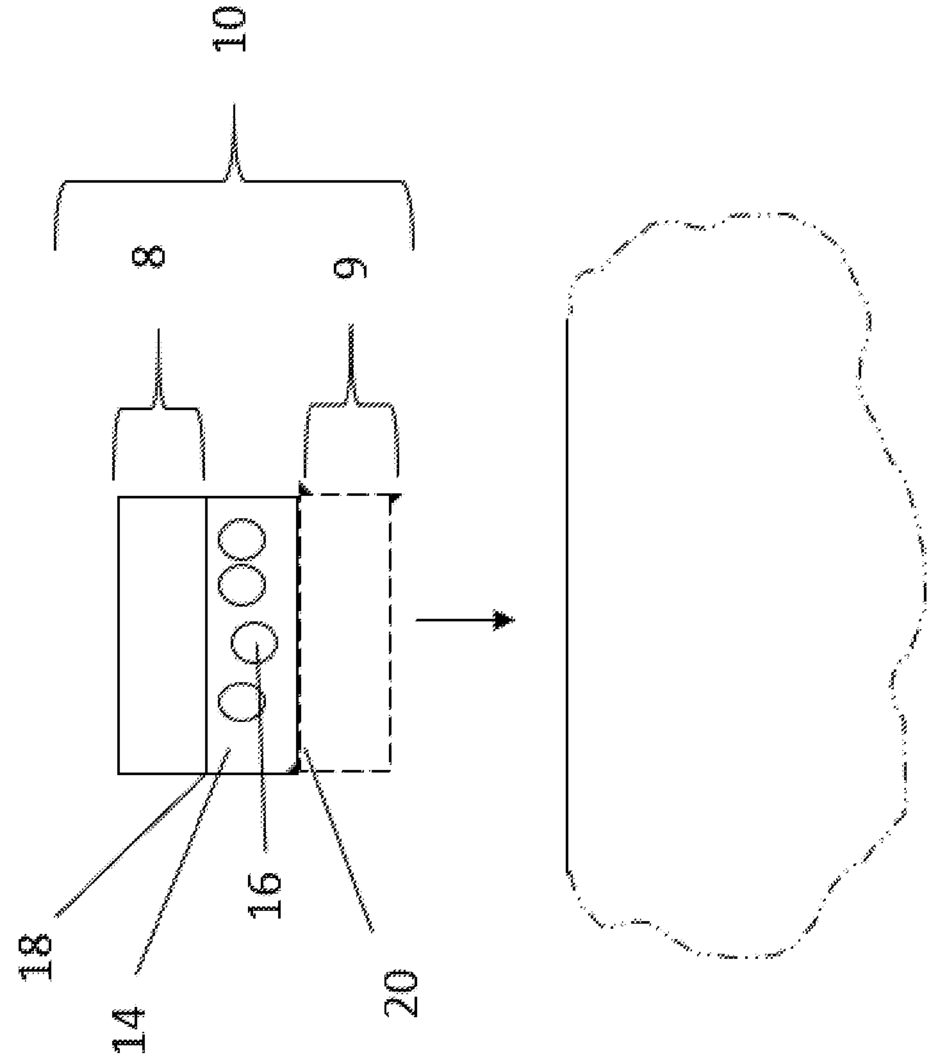


FIG. 2

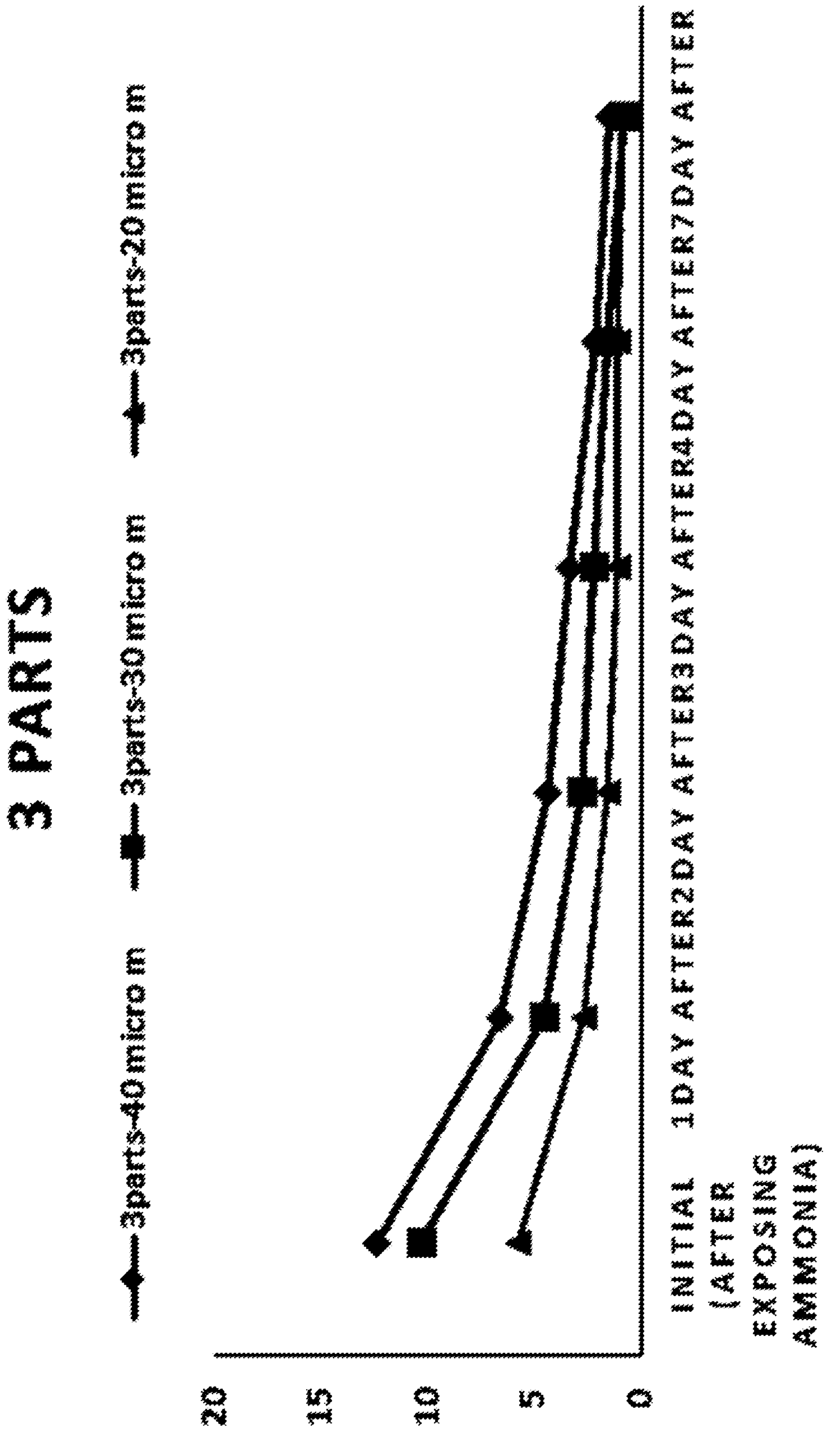
3 PARTS
3parts-40micro m
3parts-30micro m
3parts-20micro m
20
15
10
5
0
INITIAL (AFTER EXPOSING AMMONIA)
1DAY AFTER
2DAY AFTER
3DAY AFTER
4DAY AFTER
7DAY AFTER

FIG. 3A

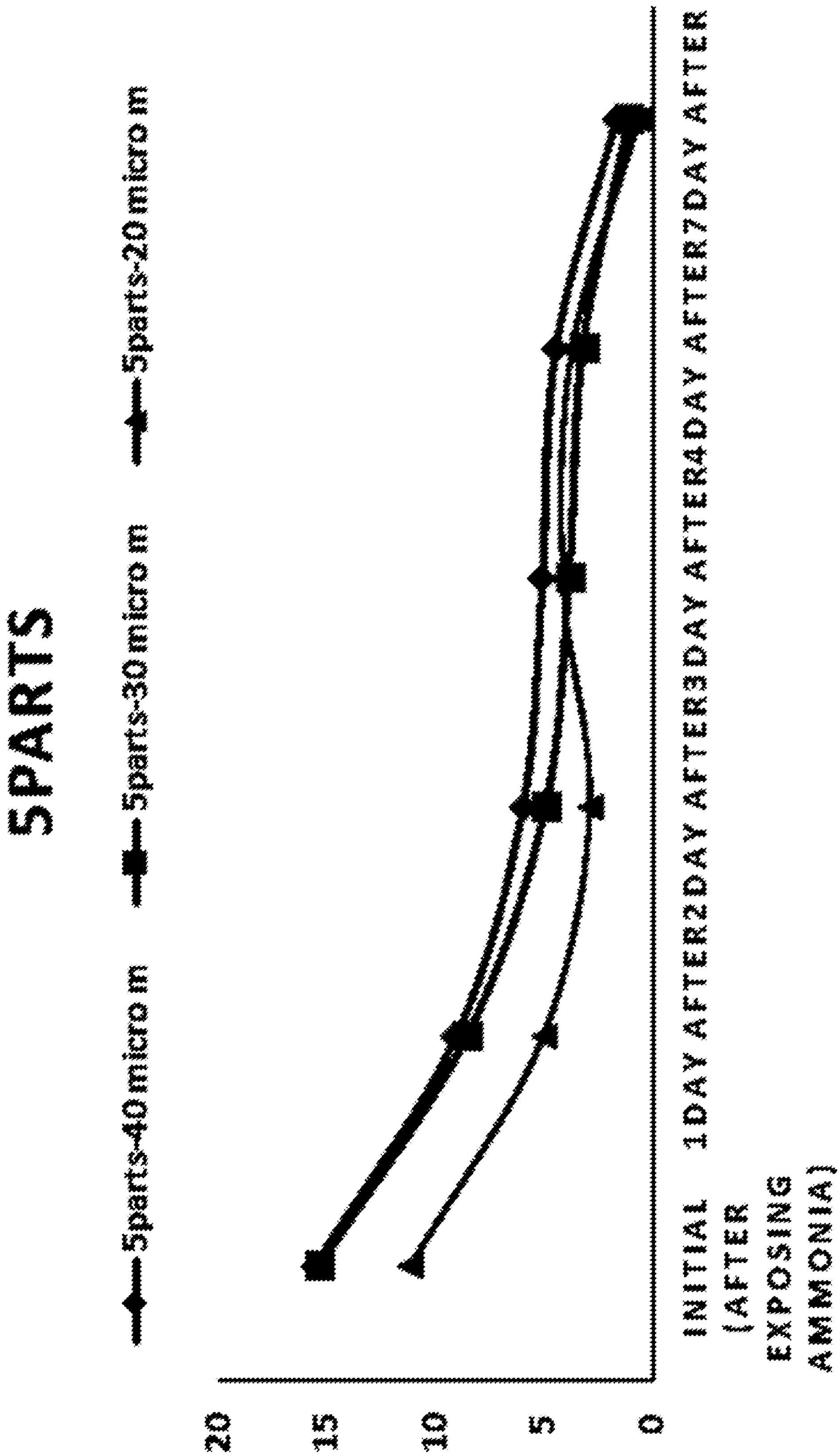
5PARTS
5parts-40 micro m
5parts-30 micro m
5parts-20 micro m
20
15
10
5
0
INITIAL (AFTER EXPOSING AMMONIA)
1DAY AFTER
2DAY AFTER
3DAY AFTER
4DAY AFTER
7DAY AFTER

FIG. 3B

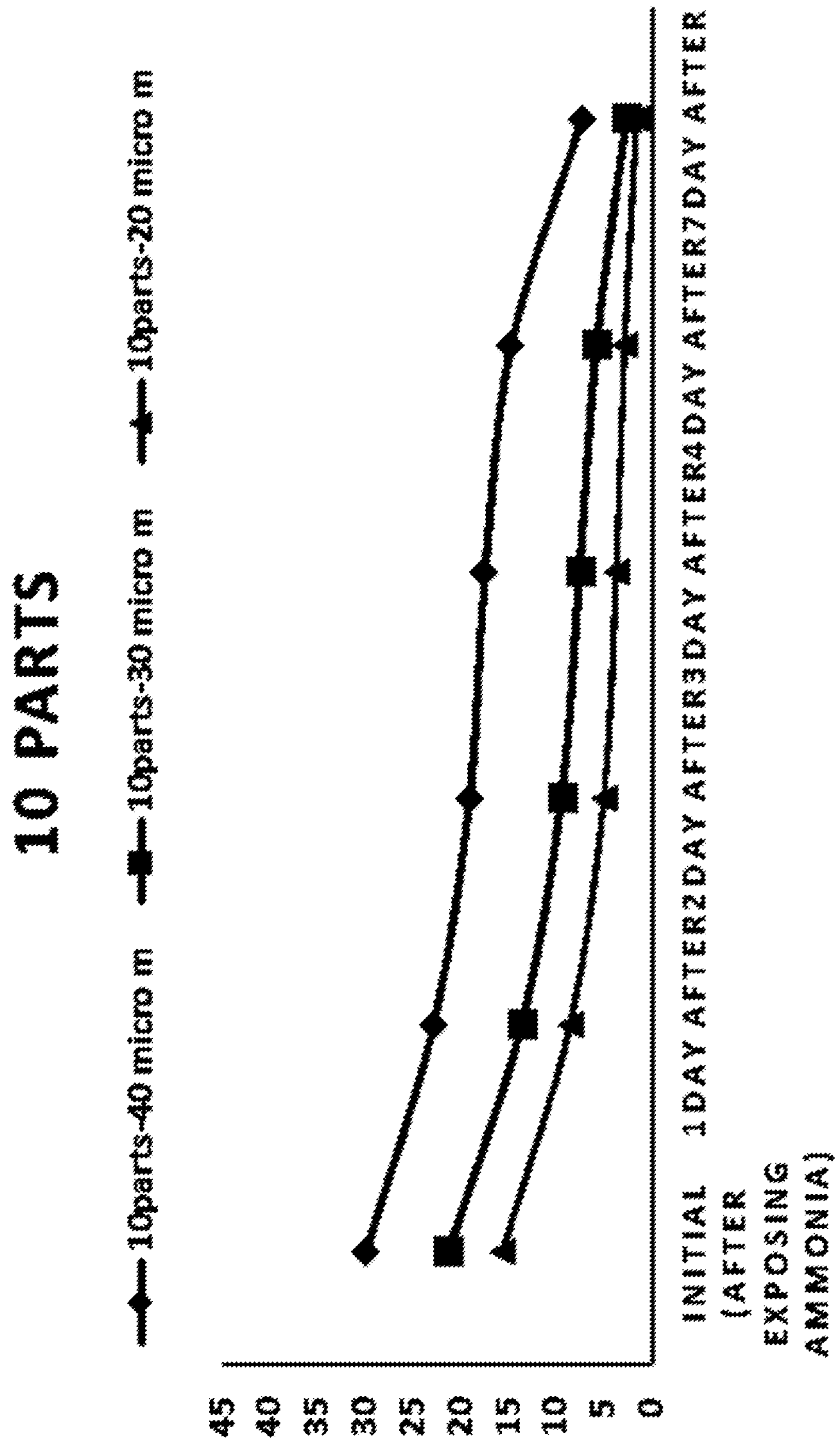
10 PARTS
10parts-40 micro m
10parts-30 micro m
10parts-20 micro m
45
40
35
30
25
20
15
10
5
0
INITIAL (AFTER EXPOSING AMMONIA)
1DAY AFTER
2DAY AFTER
3DAY AFTER
4DAY AFTER
7DAY AFTER

FIG. 3C

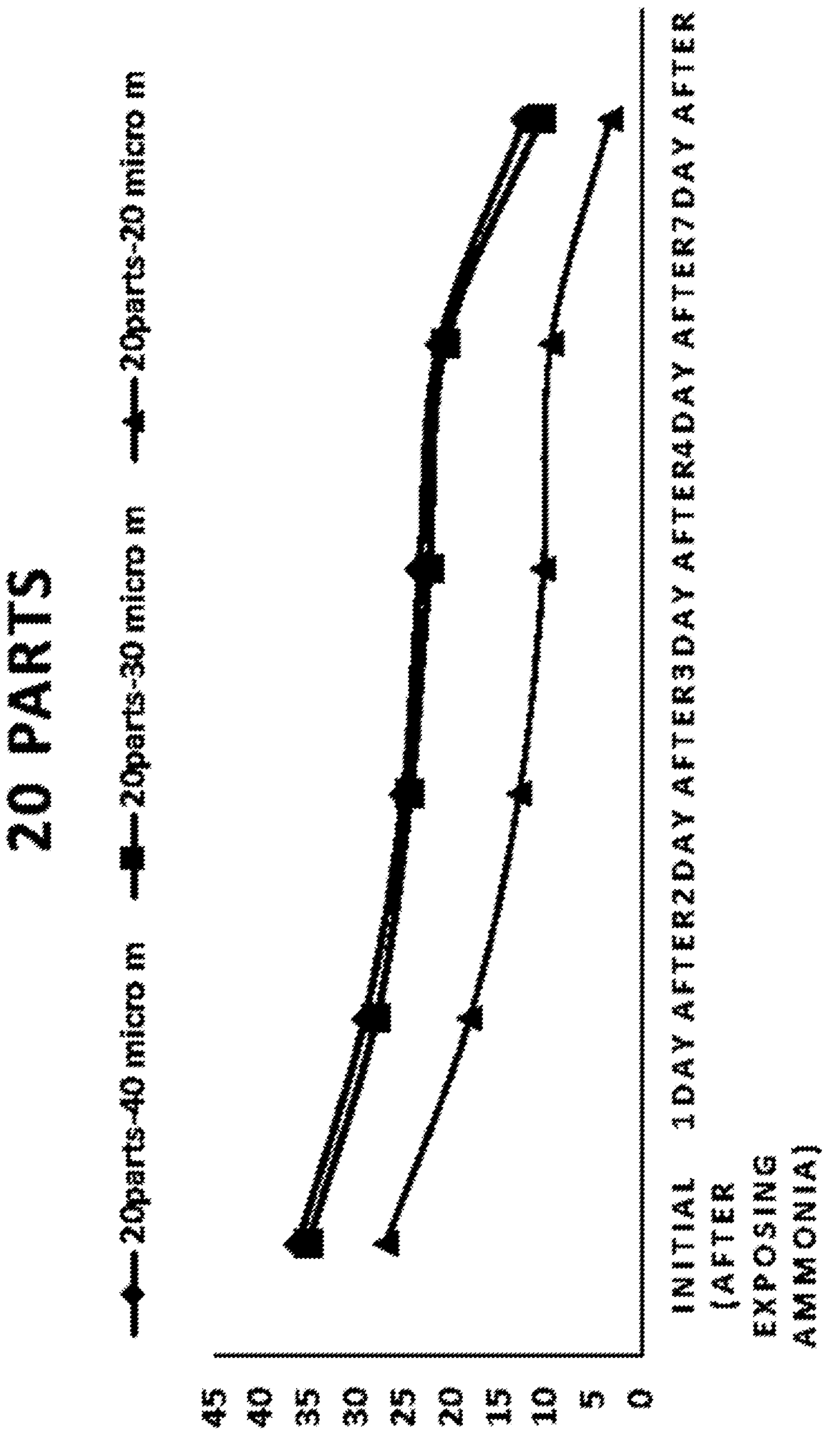
20 PARTS
20parts-40 micro m
20parts-30 micro m
20parts-20 micro m
45
40
35
30
25
20
15
10
5
0
INITIAL (AFTER EXPOSING AMMONIA)
1DAY AFTER
2DAY AFTER
3DAY AFTER
4DAY AFTER
7DAY AFTER

FIG. 3D

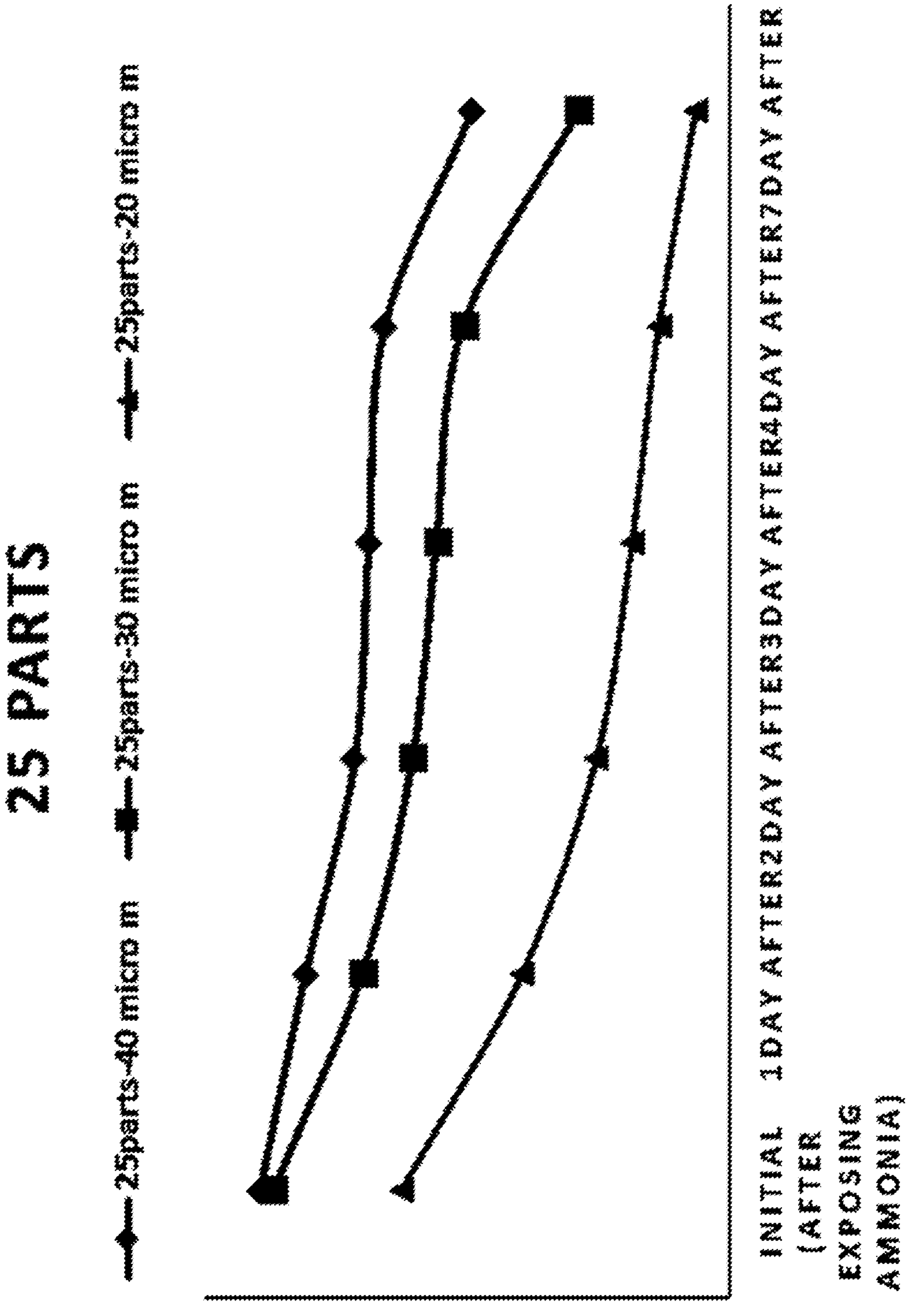
25 PARTS
25parts-40 micro m
25parts-30 micro m
25parts-20 micro m
45
40
35
30
25
20
15
10
5
0
INITIAL (AFTER EXPOSING AMMONIA)
1DAY AFTER
2DAY AFTER
3DAY AFTER
4DAY AFTER
7DAY AFTER

FIG. 3E

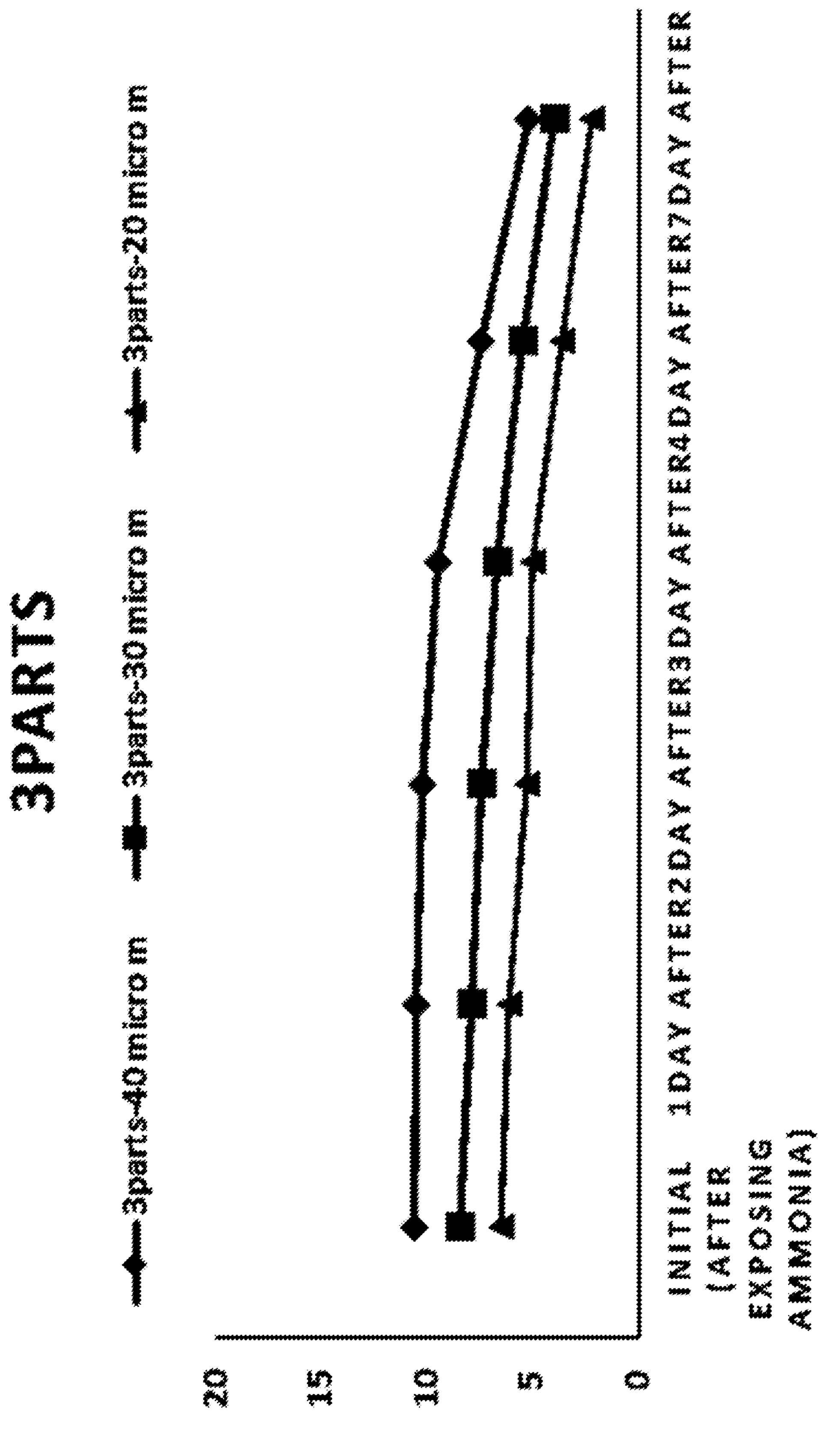
3PARTS
3parts-40 micro m
3parts-30 micro m
3parts-20 micro m
20
15
10
5
0
INITIAL (AFTER EXPOSING AMMONIA)
1DAY AFTER
2DAY AFTER
3DAY AFTER
4DAY AFTER
7DAY AFTER

FIG. 4A

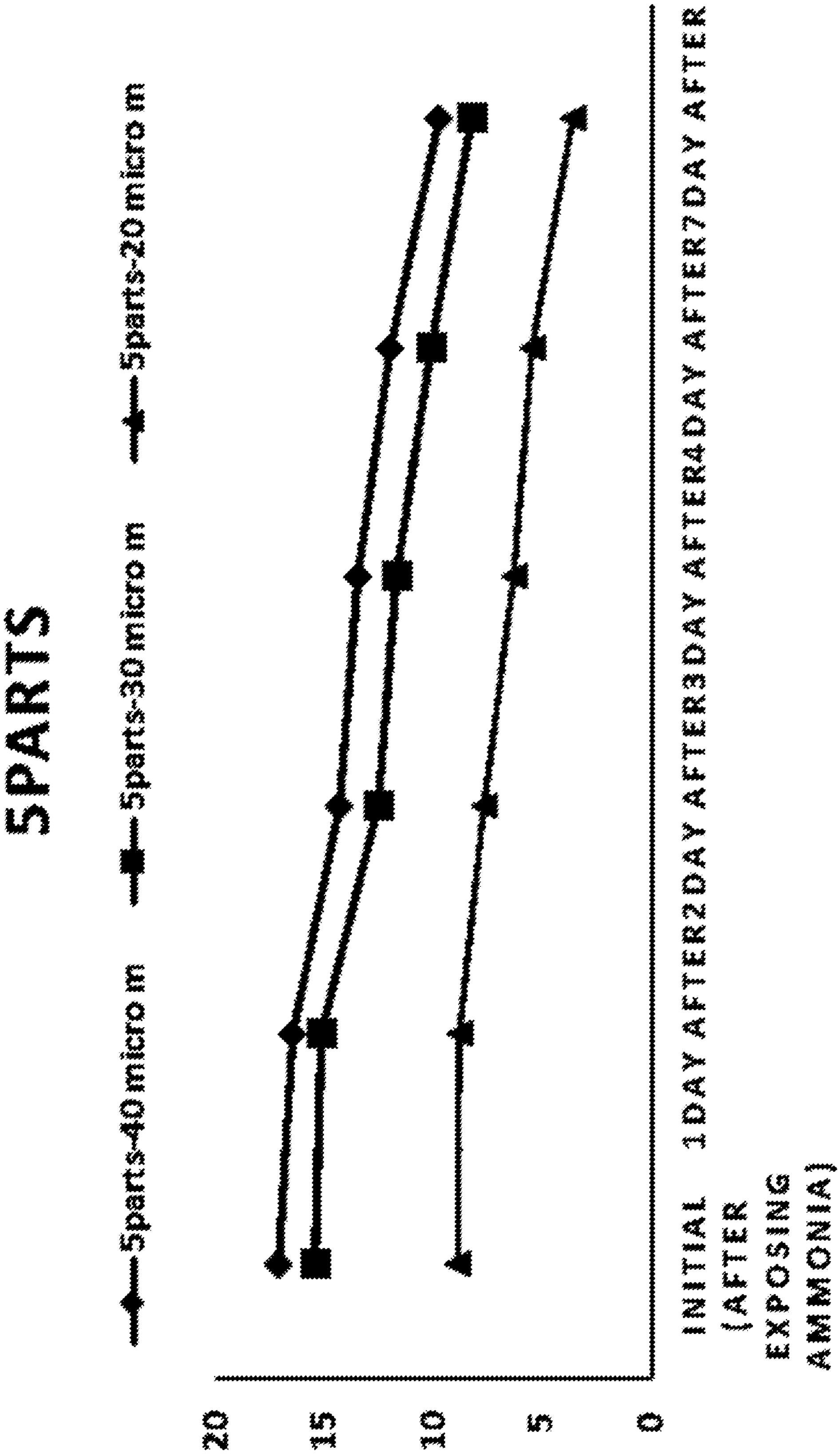
5PARTS
5parts-40 micro m
5parts-30 micro m
5parts-20 micro m
20
15
10
5
0
INITIAL (AFTER EXPOSING AMMONIA)
1DAY AFTER
2DAY AFTER
3DAY AFTER
4DAY AFTER
7DAY AFTER

FIG. 4B

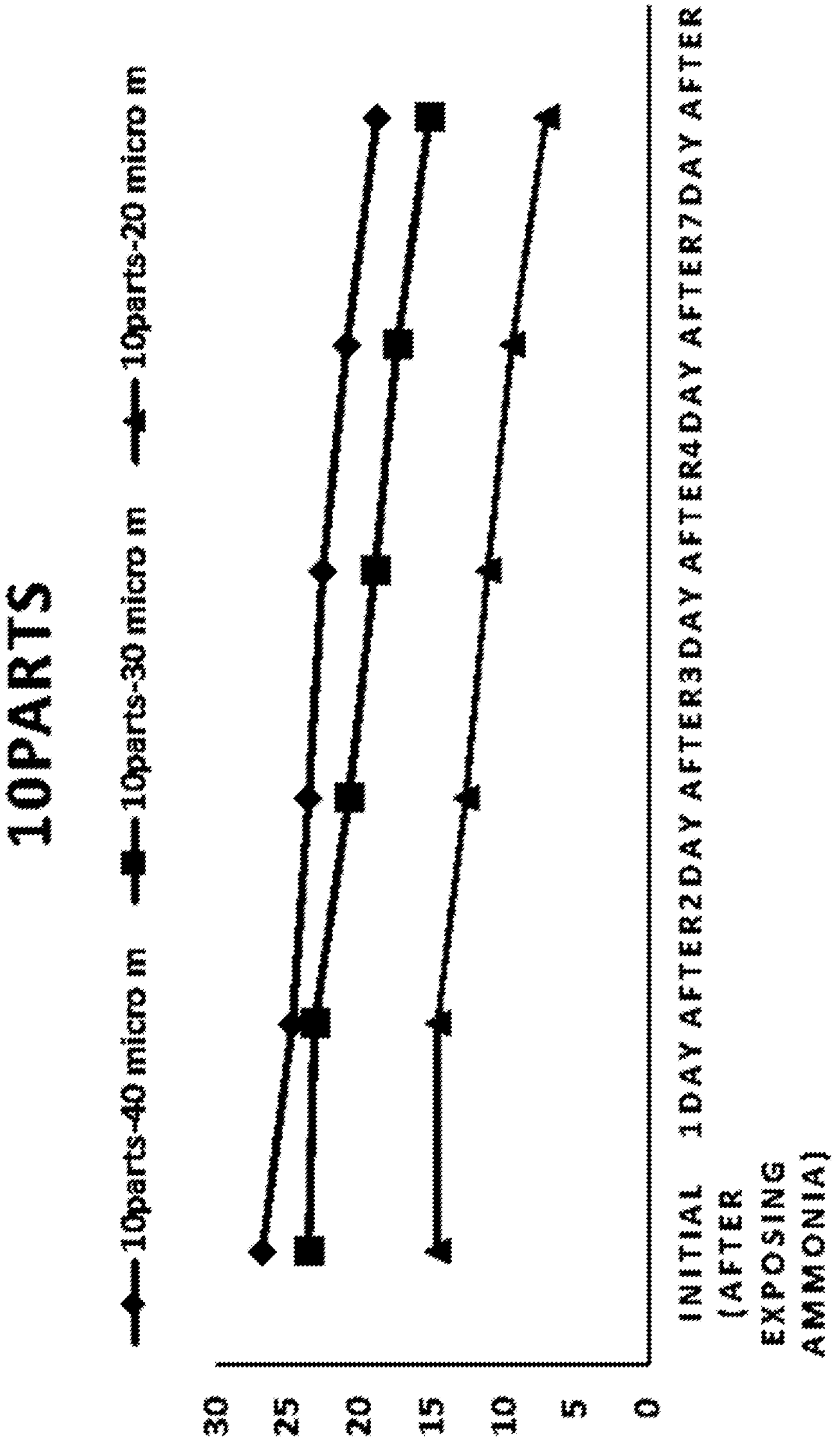
10PARTS
10parts-40 micro m
10parts-30 micro m
10parts-20 micro m
30
25
20
15
10
5
0
INITIAL (AFTER EXPOSING AMMONIA)
1DAY AFTER
2DAY AFTER
3DAY AFTER
4DAY AFTER
7DAY AFTER

FIG. 4C

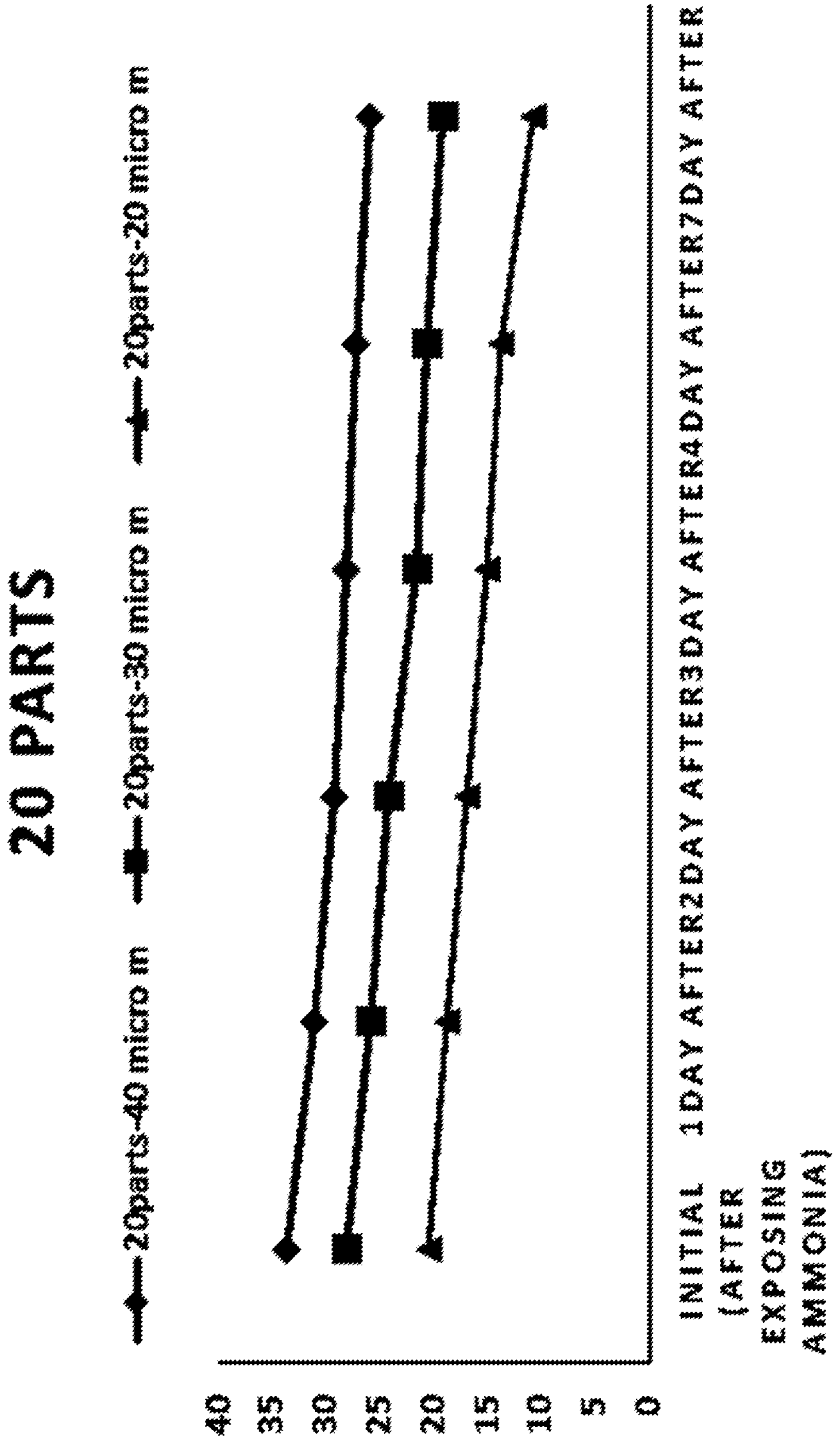
20 PARTS
20parts-40 micro m
20parts-30 micro m
20parts-20 micro m
40
35
30
25
20
15
10
5
0
INITIAL (AFTER EXPOSING AMMONIA)
1DAY AFTER
2DAY AFTER
3DAY AFTER
4DAY AFTER
7DAY AFTER

FIG. 4D

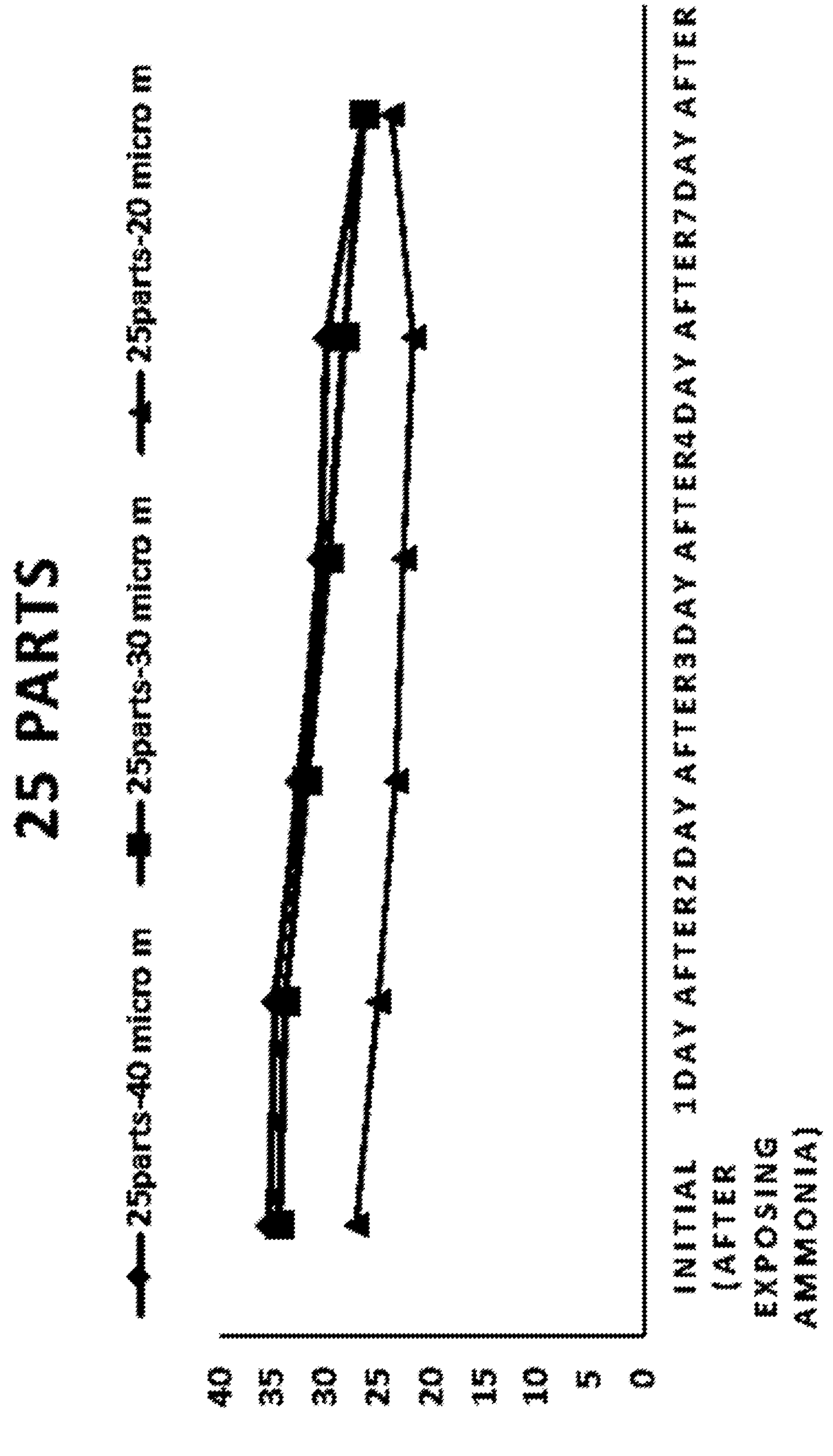
25 PARTS
25parts-40 micro m
25parts-30 micro m
25parts-20 micro m
40
35
30
25
20
15
10
5
0
INITIAL (AFTER EXPOSING AMMONIA)
1DAY AFTER
2DAY AFTER
3DAY AFTER
4DAY AFTER
7DAY AFTER

FIG. 4E

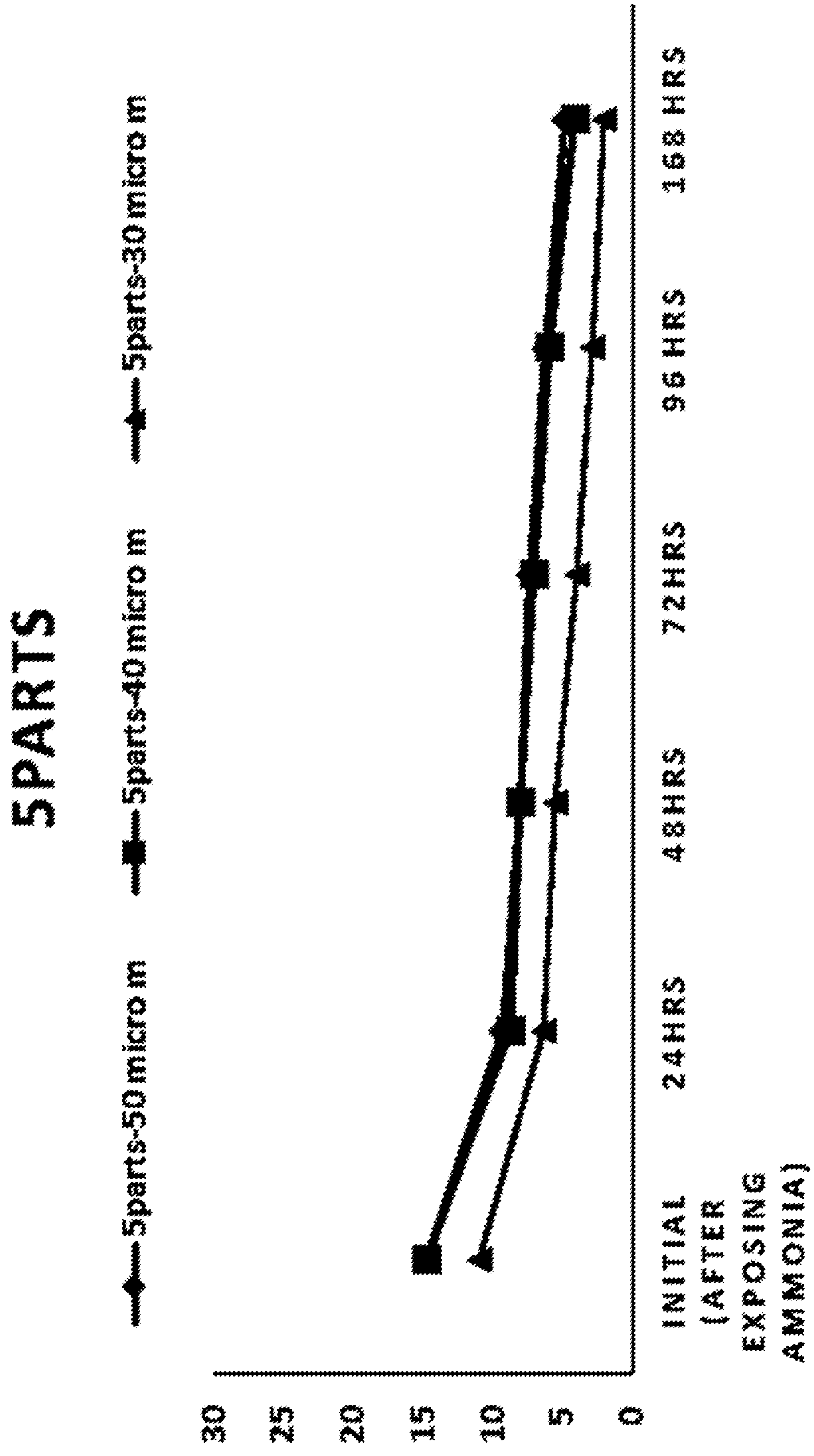
5PARTS
5parts-50 micro m
5parts-40 micro m
5parts-30 micro m
30
25
20
15
10
5
0
INITIAL (AFTER EXPOSING AMMONIA)
24HRS
48HRS
72HRS
96 HRS
168 HRS

FIG. 5A

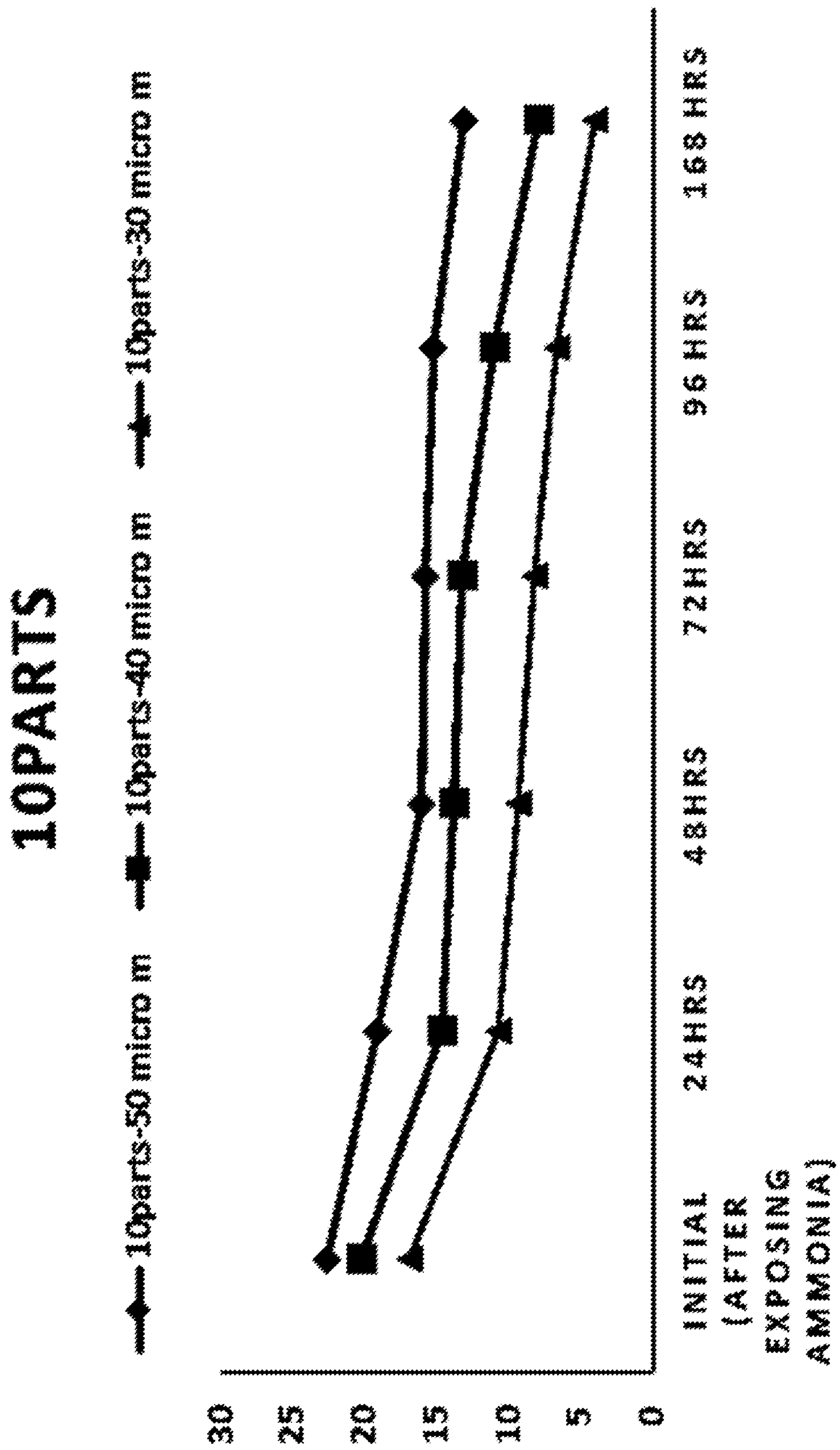
10PARTS
10parts-50 micro m
10parts-40 micro m
10parts-30 micro m
30
25
20
15
10
5
0
INITIAL (AFTER EXPOSING AMMONIA)
24HRS
48HRS
72HRS
96 HRS
168 HRS

FIG. 5B

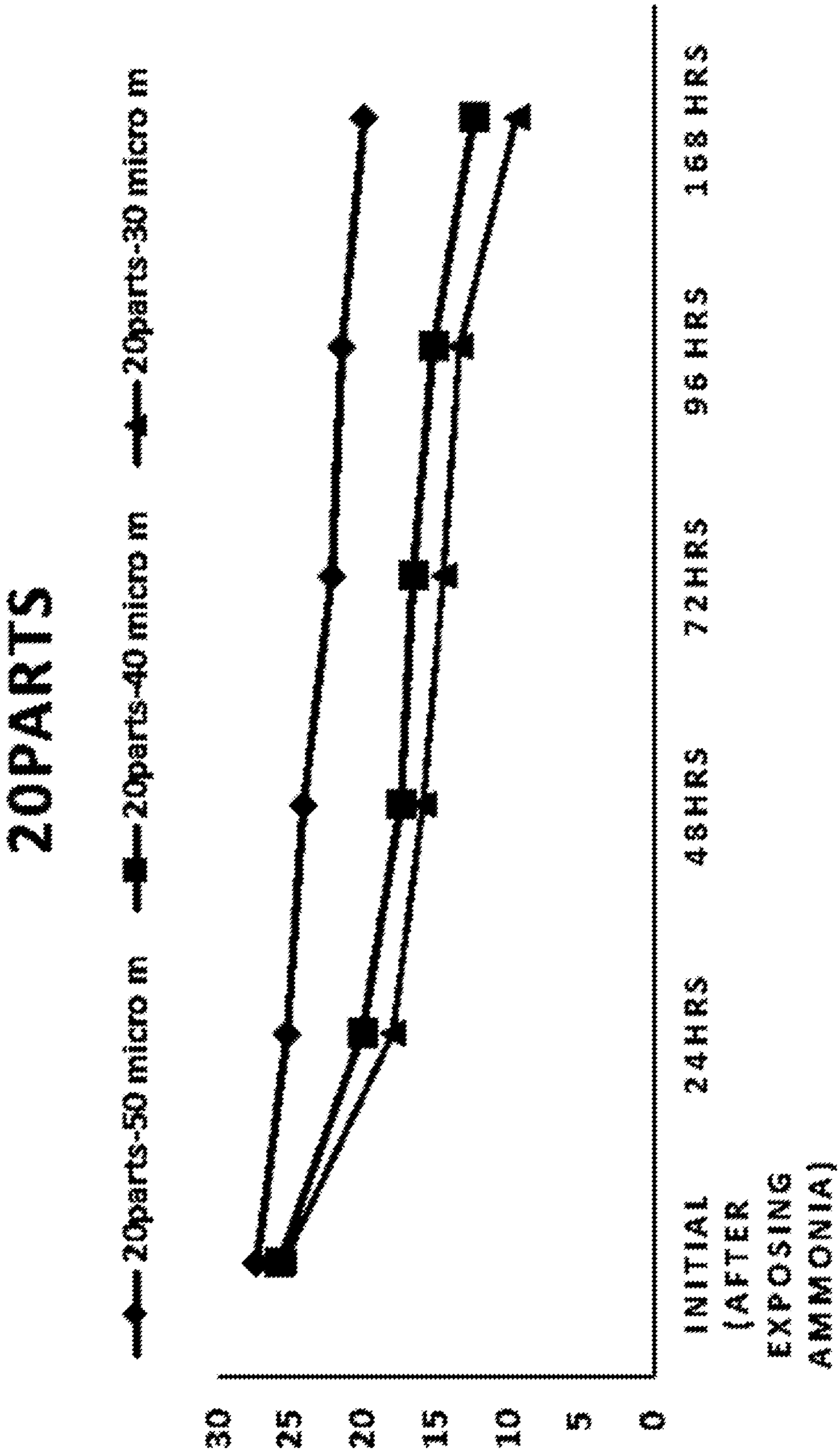
20PARTS
20parts-50 micro m
20parts-40 micro m
20parts-30 micro m
30
25
20
15
10
5
0
INITIAL (AFTER EXPOSING AMMONIA)
24HRS
48HRS
72HRS
96 HRS
168 HRS

FIG. 5C

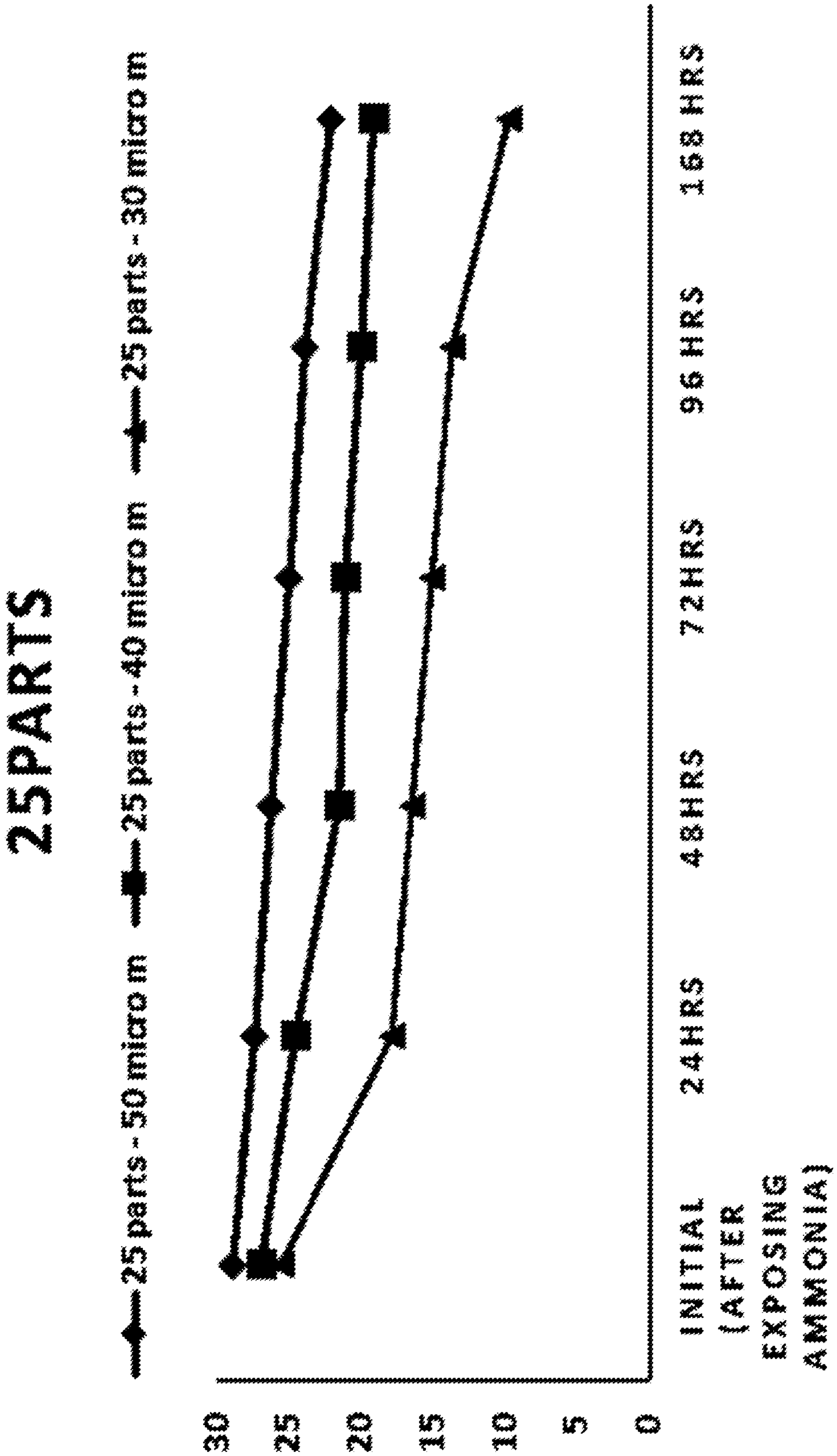
25PARTS
25 parts - 50 micro m
25 parts - 40 micro m
25 parts - 30 micro m
30
25
20
15
10
5
0
INITIAL (AFTER EXPOSING AMMONIA)
24HRS
48HRS
72HRS
96 HRS
168 HRS

FIG. 5D

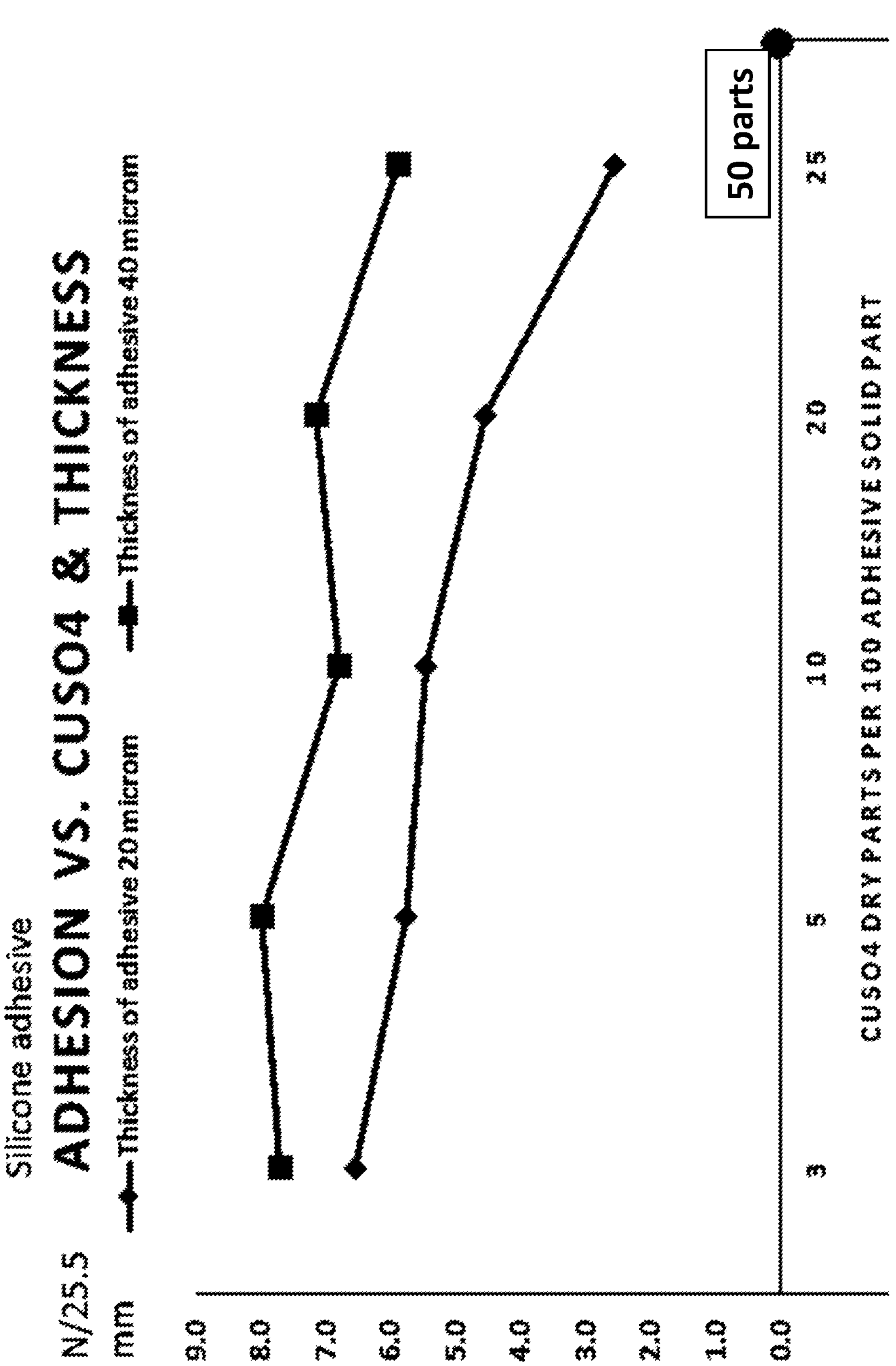
Silicone adhesive
ADHESION VS. CUSO4 & THICKNESS
N/25.5 mm
Thickness of adhesive 20 microm
Thickness of adhesive 40 microm
9.0
8.0
7.0
6.0
5.0
4.0
3.0
2.0
1.0
0.0
3
5
10
20
25
50 parts
CUSO4 DRY PARTS PER 100 ADHESIVE SOLID PART

FIG. 6

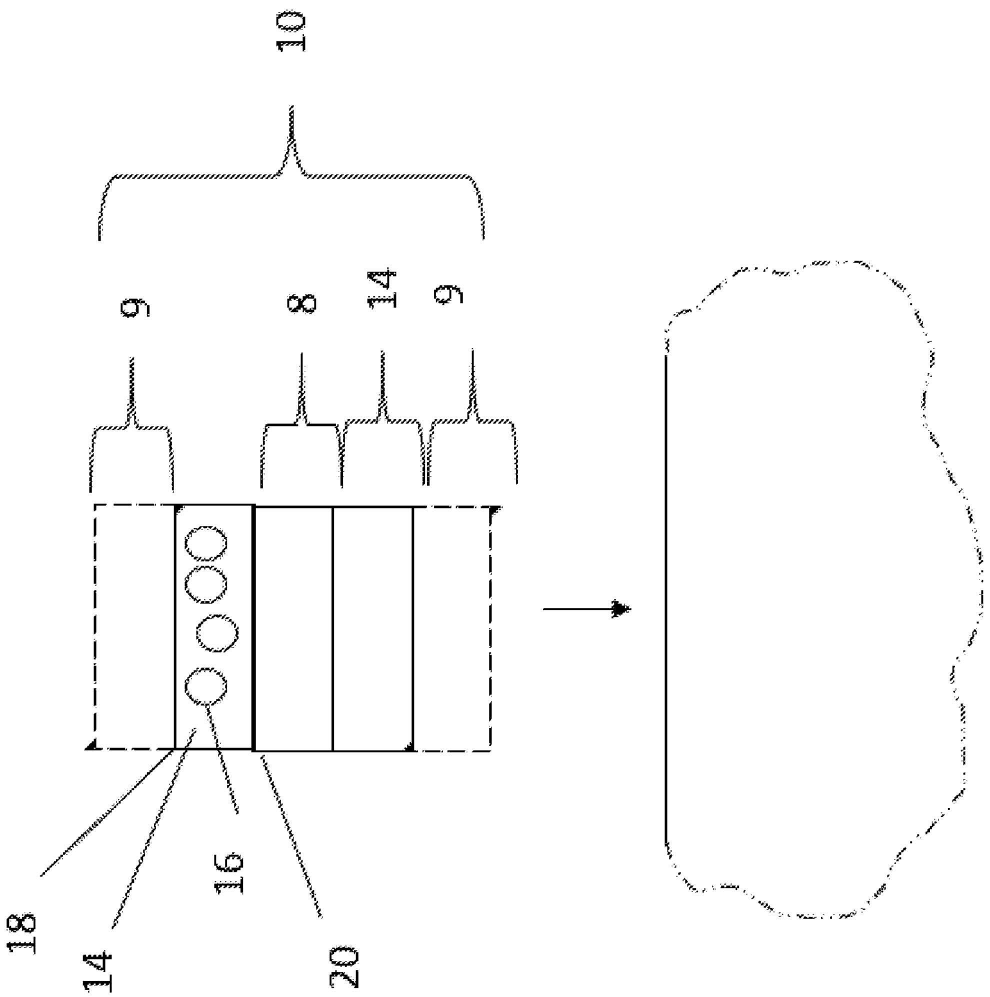


FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2017209366 A
- US 2008041136 A
- US 3528780 A
- US 7592184 B
- US 5529841 A
- JP S6150032 B
- US 9958397 B

### Non-patent literature cited in the description

- **PETERSON et al.** *Industrial & Engineering Chemistry Research,* 2013, vol. 53, 701-707